# FASCICULE DE BREVET EUROPEEN

(11) **EP 0 911 570 B1**
(45) Date de publication et mention de la délivrance du brevet: **21.01.2004**
(21) Numéro de dépôt: 98402568.4
(22) Date de dépôt: 15.10.1998
(51) Int. Cl.: F16M 11/12

(54) **Mécanisme de pointage à deux mouvements de rotation indépendants, sans point mort**
Richtanordnung mit zwei unabhängigen Drehbewegungen und keinem Totpunkt
Pointing mechanism with two independant rotation movements and no dead-centre

(30) Priorité: 17.10.1997 FR 9713051
(43) Date de publication de la demande: 28.04.1999
(73) Titulaire: ACC Ingenierie & Maintenance, 63016 Clermont Ferrand Cedex 1 (FR)
(72) Inventeur: Delorme, Gérard, 71230 Saint Vallier (FR); Daviot, Jacques, 75011 Paris (FR)
(74) Mandataire: Bezault, Jean

(56) Documents cités:
- US-A- 3 202 015
- US-A- 3 262 321
- US-A- 3 987 452
- US-A- 4 580 461

## Description

L'invention se rapporte à un mécanisme à deux degrés de liberté de mouvement en rotation, permettant l'orientation d'une pièce terminale par rapport à une pièce de base considérée comme référentiel.

Un tel mécanisme trouve plus particulièrement, mais non nécessairement application dans les domaines des supports orientables d'appareils divers (antennes, appareils d'optique, armes, capteurs, outils, ...) et des articulations pour bras manipulateurs.

Il permet à une demi-droite d'origine fixe, liée à la pièce terminale de balayer par rapport à un référentiel, un espace conique dit "cône de pointage" . Cet espace est caractérisé par la surface sphérique incluant toutes les trajectoires possibles d'un point appartenant à la demi-droite, distinct de son origine.

Dans les domaines précédemment cités, parmi les mécanismes à deux mouvements de rotation indépendants, on connaît deux types de mécanismes dits "tourelle site-azimut" et "suspension de Cardan", permettant à une demi-droite d'origine fixe et liée à la pièce terminale, de balayer un cône de pointage. Ces deux types de mécanismes, de structures semblables, ne diffèrent que par la disposition spatiale de leurs pièces constitutives par rapport au cône de pointage. Ils sont chacun constitués de trois pièces : une pièce terminale, une pièce intermédiaire et une pièce de base ou "pièce fixe". La pièce terminale est destinée à être animée d'un premier mouvement de rotation par rapport à la pièce intermédiaire, laquelle est animée d'un second mouvement de rotation par rapport à la pièce fixe. La pièce terminale peut alors avoir deux mouvements de rotation indépendants par rapport à la pièce fixe.

Dans le cas d'une tourelle site-azimut faisant l'objet d'une description détaillée ci-après, il apparaît que :
- la demi-droite d'origine fixe, liée à la pièce terminale, balaie un cône de pointage qui contient une position singulière ou "point mort", correspondant à une amplitude de mouvement nulle de la pièce terminale par rapport à la pièce fixe, et, si la rotation en azimut est continue,
- la transmission par câbles, par exemple de signaux électriques ou optiques de la pièce fixe à la pièce terminale, nécessitent des raccords ou collecteurs tournants.

Dans le cas d'une suspension de Cardan faisant également l'objet d'une description détaillée ci-après, il apparaît que:
- la demi-droite d'origine fixe, liée à la pièce terminale, balaie un cône de pointage qui contient deux positions singulières ou "points morts", mais
- la transmission par câbles, dans ce cas, ne requiert pas nécessairement de raccords ou collecteurs tournants. Cette dernière caractéristique de la suspension de Cardan constitue un net avantage sur les mécanismes de type tourelle site-azimut.

Le principe d'une suspension de Cardan peut être brièvement décrit par ce qui suit.

Elle comprend généralement des moyens de support solidaires de la pièce fixe. Ces moyens de support portent des moyens de fixation dans lesquels est montée à rotation la pièce intermédiaire ou "moyens de transmission". Ainsi, ces moyens de transmission sont animés d'un premier mouvement de rotation par rapport aux moyens de fixation, de premier angle β et autour d'un premier axe X. Les moyens de transmission portent une première articulation pour que la pièce terminale soit animée d'un second mouvement de rotation par rapport aux moyens de transmission. Ce second mouvement de rotation d'amplitude égale à un second angle α, se fait autour d'un second axe Y perpendiculaire au premier axe X et coupant ce dernier en un premier point O.

Il apparaît alors que si une demi-droite d'origine fixe liée à la pièce terminale, coïncide avec le premier axe X au cours de son second mouvement de rotation d'angle α, la surface balayée par cette demi-droite au cours du premier mouvement de rotation d'angle β, est nulle. Cette situation correspond aux deux points morts cités précédemment.

L'invention a notamment pour but de procurer un mécanisme à deux mouvements de rotation indépendants qui ne présente pas les inconvénients des mécanismes classiques du type suspension de cardan ou tourelle site-azimut, c'est-à-dire sans point mort et sans nécessairement utiliser des raccords ou collecteurs tournants.

L'invention propose à cet effet un mécanisme du type suspension de Cardan décrit précédemment, dans lequel :
- d'une part, les moyens de support peuvent au moins en partie, pivoter d'un troisième angle γ autour d'une seconde articulation que comprend la pièce fixe, de manière à entraîner un mouvement circulaire des moyens de fixation autour du second axe Y. Ainsi, le premier axe X peut pivoter autour du second axe Y d'une amplitude de rotation égale au troisième angle γ.
- d'autre part, les moyens de support et les moyens de transmission sont propres à coopérer ensemble pour commander la première articulation, de sorte qu'une rotation des moyens de support autour de la seconde articulation induise une rotation de la pièce terminale par rapport aux moyens de transmission, autour de ladite première articulation. Ce mouvement de rotation de la pièce terminale constitue le second mouvement du mécanisme. Son amplitude est de second angle α, lié au troisième angle γ par une fonction prédéterminée.

Ainsi, tout point de la pièce terminale situé sur une droite passant par le premier point O et perpendiculaire au premier axe X peut décrire une trajectoire d'amplitude non nulle au cours des premier et/ou second mouvements de rotation de la pièce terminale par rapport à la pièce fixe.

Selon des caractéristiques avantageuses de l'invention:
- Les moyens de transmission comprennent en outre au moins une tige cylindrique circulaire d'axe de révolution confondu avec le premier axe X, montée dans un logement homologue d'un bloc que comprennent les moyens de fixation. Ainsi, les moyens de transmission peuvent pivoter du premier angle β par rapport aux moyens de fixation, autour du premier axe X.
- Des moyens de butée sont montés sur la tige cylindrique et/ou sur ledit bloc pour empêcher un mouvement de translation de la tige cylindrique et des moyens de transmission par rapport aux moyens de fixation, suivant le premier axe X.

Selon l'invention, la fonction prédéterminée entre le second angle α et le troisième angle γ est telle que le second angle α est sensiblement égal au troisième angle γ.

Plusieurs modes de réalisation peuvent être envisagés.

Dans un premier mode de réalisation, les moyens de support comportent au moins :
- une première tige montée à rotation sur la pièce fixe autour de la seconde articulation,
- un premier bras et un second bras montés à rotation sur la première tige respectivement autour d'une troisième et d'une quatrième articulations, et portant respectivement une cinquième et une sixième articulations autour desquelles pivotent les moyens de fixation, et
- une seconde tige montée à rotation sur l'un au moins des premier et second bras et sur la pièce fixe, respectivement autour d'une septième et d'une huitième articulations, de telle manière que :

- les première, seconde, troisième, quatrième, cinquième, sixième, septième et huitième articulations autorisent des mouvements de rotation d'axes respectifs parallèles entre eux et perpendiculaires au premier axe X,
- les première, seconde, troisième, quatrième, cinquième, sixième, septième et huitième articulations occupent dans l'espace des positions respectives qui appartiennent à un plan contenant le premier axe X,
- les première, cinquième et sixième articulations sont alignées sur le premier axe X,
- les seconde, troisième et quatrième articulations sont alignées,
- les première, seconde et huitième articulations sont alignées,
- les positions respectives des seconde, huitième, septième et troisième articulations forment un parallélogramme,
- les positions respectives des cinquième, sixième, quatrième et troisième articulations forment un parallélogramme,
- les cinquième et troisième articulations sont espacées d'une distance égale à une distance séparant les sixième et quatrième articulations, et à une distance séparant les première et seconde articulations.

Ainsi, un mouvement de rotation de troisième angle γ de la première tige autour de la seconde articulation entraîne un mouvement de rotation de troisième angle γ du premier axe X autour du second axe Y, et un pivotement des moyens de fixation par rapport aux premier et second bras, autour des cinquième et sixième articulations, de troisième angle γ.

Par ailleurs, les première et cinquième articulations sont liées par des moyens de couplage pour qu'une rotation de troisième angle γ des moyens de fixation autour des cinquième et/ou sixième articulations induise le second mouvement de rotation de second angle α autour de la première articulation, de la pièce terminale par rapport aux moyens de transmission.

Les moyens de couplage comprennent un premier et un second pignons de diamètres respectifs identiques, montés à rotation respectivement sur les moyens de fixation et sur les moyens de transmission, autour des cinquième et première articulations. Ces premier et second pignons sont solidaires respectivement du premier bras et de la pièce terminale. D'une part, un mouvement de rotation de troisième angle γ du premier axe X autour du second axe Y induit alors un mouvement de rotation d'un angle opposé au troisième angle γ du premier pignon par rapport aux moyens de fixation autour de la cinquième articulation. D'autre part, un mouvement de rotation de second angle α du second pignon entraîne le second mouvement de rotation de second angle α de la pièce terminale par rapport aux moyens de transmission, autour de la première articulation. Les moyens de couplage comprennent également des moyens d'engrenage entre les premier et second pignons pour qu'un mouvement de rotation d'angle opposé au troisième angle γ du premier pignon induise un mouvement de rotation du second pignon de second angle α égal au troisième angle γ.

Ces moyens d'engrenage comprennent une première et une seconde crémaillères parallèles au premier axe X et disposées de part et d'autre de celui-ci. Elles sont engrenées respectivement aux premier et second pignons et solidarisées l'une à l'autre par des moyens de butée tournants pour empêcher un mouvement de translation de la seconde crémaillère par rapport à la première crémaillère suivant le premier axe X, tout en autorisant un mouvement de rotation de premier angle β des second pignon et seconde crémaillère autour du premier axe X. Ainsi, un mouvement de rotation d'angle opposé au troisième angle γ du premier pignon induit des mouvements de translation identiques des première et seconde crémaillères suivant le premier axe X, ce qui permet un mouvement de rotation du second pignon de second angle α égal au troisième angle γ, entraîné par le mouvement de translation de la seconde crémaillère.

Dans ce premier mode de réalisation, les premier et second pignons s'engrènent directement avec les première et seconde crémaillères, respectivement.

Dans un second mode de réalisation, ils s'engrènent par l'intermédiaire respectivement de troisième et quatrième pignons de diamètres respectifs identiques et situés de part et d'autre du premier axe X.

Dans un troisième mode de réalisation, les moyens d'engrenage comprennent plutôt :
- des troisième et quatrième pignons de diamètres respectifs identiques, situés de part et d'autre du premier axe X, et engrenés respectivement aux premier et second pignons, et
- une crémaillère cylindrique circulaire d'axe principal confondu avec le premier axe X, engrenée au troisième et quatrième pignons. Cette crémaillère cylindrique circulaire peut se déplacer selon un mouvement de translation suivant le premier axe X et pivoter selon un mouvement de rotation de premier angle β autour du premier axe X.

Selon un quatrième mode de réalisation encore différent, les moyens de couplage comprennent une première et une seconde bielles comportant respectivement une neuvième et une dixième articulations, et montées à rotation respectivement sur les moyens de fixation et sur les moyens de transmission, autour des cinquième et première articulations. Les cinquième et neuvième articulations sont espacées d'une distance sensiblement égale à une distance séparant les première et dixième articulations. Les première et seconde bielles sont solidaires respectivement du premier bras et de la pièce terminale de sorte que:
- un mouvement de rotation de troisième angle γ du premier axe X autour du second axe Y induise un mouvement de rotation d'angle opposé au troisième angle γ de la première bielle par rapport aux moyens de fixation autour de la cinquième articulation, et
- un mouvement de rotation de second angle α de la seconde bielle entraîne le second mouvement de rotation de second angle α de la pièce terminale par rapport aux moyens de transmission, autour de la première articulation.

Les moyens de couplage comprennent également des troisième et quatrième tiges propres à coulisser selon un mouvement de translation suivant le premier axe X. Elles sont solidarisées l'une à l'autre par des moyens de butée tournants pour empêcher un mouvement de translation de la quatrième tige par rapport à la troisième tige suivant le premier axe X, tout en autorisant un mouvement de rotation de premier angle β des seconde bielle et quatrième tige autour du premier axe X.

Les moyens de couplage comprennent également:
- des premiers moyens d'entraînement entre la première bielle et la troisième tige pour qu'un mouvement de rotation d'angle opposé au troisième angle γ de la première bielle induise un mouvement de translation suivant le premier axe X des troisième et quatrième tiges, et
- des second moyens d'entraînement entre la quatrième tige et la seconde bielle pour qu'un mouvement de translation suivant le premier axe X de la quatrième tige induise un mouvement de rotation d'angle égal au troisième angle γ de la seconde bielle.

Dans ce quatrième mode de réalisation, les premiers et seconds moyens d'entraînement sont réalisés respectivement sous forme de première et seconde coulisses solidaires respectivement des troisième et quatrième tiges. Elles comportent un logement homologue respectivement aux neuvième et dixième articulations, et sont situées de part et d'autre du premier axe X. Ainsi, les neuvième et dixième articulations peuvent coulisser suivant des axes respectifs perpendiculaires au premier axe X, dans les première et seconde coulisses, respectivement.

Dans un cinquième mode de réalisation différent, les premiers et seconds moyens d'entraînement sont réalisés respectivement sous forme de troisième et quatrième bras, solidaires respectivement des première et seconde bielles et montés à rotation respectivement autour des neuvième et dixième articulations. Les troisième et quatrième bras sont montés à rotation par ailleurs autour d'une onzième et d'une douzième articulations que portent les troisième et quatrième tiges, respectivement.

Selon un sixième mode de réalisation, les premiers et seconds moyens d'entraînement comprennent respectivement des premier et second pignons de diamètres respectifs égaux, montés à rotation respectivement sur les neuvième et dixième articulations autour d'axes respectifs parallèles au second axe Y. Ces premier et second pignons sont solidaires respectivement des troisième et quatrième tiges par l'intermédiaire d'une onzième et d'une douzième articulations respectivement. Par ailleurs, les premiers et seconds moyens d'entraînement comprennent respectivement une première et une seconde portions de roue dentée, de centre respectifs confondus avec les positions occupées par les cinquième et première articulations, respectivement, et de diamètres respectifs égaux au double du diamètre du premier pignon. Ces première et seconde portions de roue dentée sont solidaires respectivement du premier bras et de la pièce terminale, et disposées de part et d'autre du premier axe X, la partie dentée de l'une étant en regard de la partie dentée de l'autre.

Dans un septième mode de réalisation encore distinct, les première et seconde articulations comprennent respectivement un premier et un second capteurs de position angulaire, reliés à un module de commande de la première articulation. Cette première articulation est alors commandée de telle manière que le second angle α de rotation de la pièce terminale par rapport aux moyens de transmission, soit sensiblement égal au troisième angle γ de rotation d'une partie au moins des moyens de support par rapport à la pièce fixe, autour de la seconde articulation.

Enfin, dans un huitième mode de réalisation, les moyens de support cette fois, sont agencés de manière différente. En effet, ils comprennent maintenant un pignon monté à rotation en son centre sur la pièce fixe autour de la seconde articulation. Ce pignon communique son mouvement de rotation de troisième angle γ à une couronne dentée de centre confondu avec le premier point O. Cette couronne porte, par ailleurs, lesdits moyens de fixation, et ainsi le premier axe X peut pivoter autour du second axe Y, d'une amplitude de rotation sensiblement équivalente au troisième angle γ. Dans ce dernier mode réalisation, le couplage entre les première et seconde articulations peut être assuré également par l'intermédiaire d'un premier et d'un second capteurs de position angulaire reliés à un boîtier de commande.

Dans la description qui suit, faite à titre d'exemple, on se réfère aux dessins annexés, sur lesquels :
- la figure 1A représente schématiquement un mécanisme du type tourelle site-azimut,
- la figure 1B met en évidence le point mort d'une tourelle site-azimut,
- la figure 2A représente schématiquement un mécanisme du type suspension de Cardan,
- la figure 2B met en évidence les points morts d'un mécanisme de ce type,
- la figure 3 représente schématiquement le principe d'un mécanisme à deux mouvements de rotation indépendants, selon l'invention,
- les figures 4A, 4B, 4C et 4D représentent partiellement un tel mécanisme, en montrant en particulier différents exemples de modes de réalisation des moyens de fixation précités, selon l'invention.
- la figure 5 représente partiellement ce mécanisme en montrant en particulier les moyens de support précités, selon l'un des premier, second, troisième, quatrième, cinquième ou sixième modes de réalisation de l'invention,
- la figure 6 représente partiellement un tel mécanisme en montrant en particulier l'interaction entre les moyens de transmission précités, les moyens de fixation et les moyens de support, selon le premier mode de réalisation de l'invention,
- la figure 7 représente partiellement le mécanisme en montrant en particulier l'interaction entre les moyens de transmission, les moyens de fixation et les moyens de support, selon le second mode de réalisation de l'invention,
- la figure 8 représente partiellement le mécanisme en montrant en particulier l'interaction entre les moyens de transmission, les moyens de fixation et les moyens de support, selon le troisième mode de réalisation de l'invention,
- la figure 9 représente partiellement le mécanisme en montrant en particulier l'interaction entre les moyens de transmission, les moyens de fixation et les moyens de support, selon le quatrième mode de réalisation de l'invention,
- la figure 10 représente partiellement le mécanisme en montrant en particulier l'interaction entre les moyens de transmission, les moyens de fixation et les moyens de support, selon le cinquième mode de réalisation de l'invention,
- la figure 11 représente partiellement le mécanisme en montrant en particulier l'interaction entre les moyens de transmission, les moyens de fixation et les moyens de support, selon le sixième mode de réalisation de l'invention,
- la figure 12A représente schématiquement un mécanisme possédant les mêmes propriétés selon l'invention, mais réalisé suivant le septième mode de réalisation de l'invention dans lequel le couplage des première et seconde articulations se fait par l'intermédiaire d'un module de commande, et
- la figure 12B représente schématiquement un mécanisme selon le huitième mode de réalisation de l'invention, qui diffère de celui illustré sur la figure 12A par les moyens de support employés.

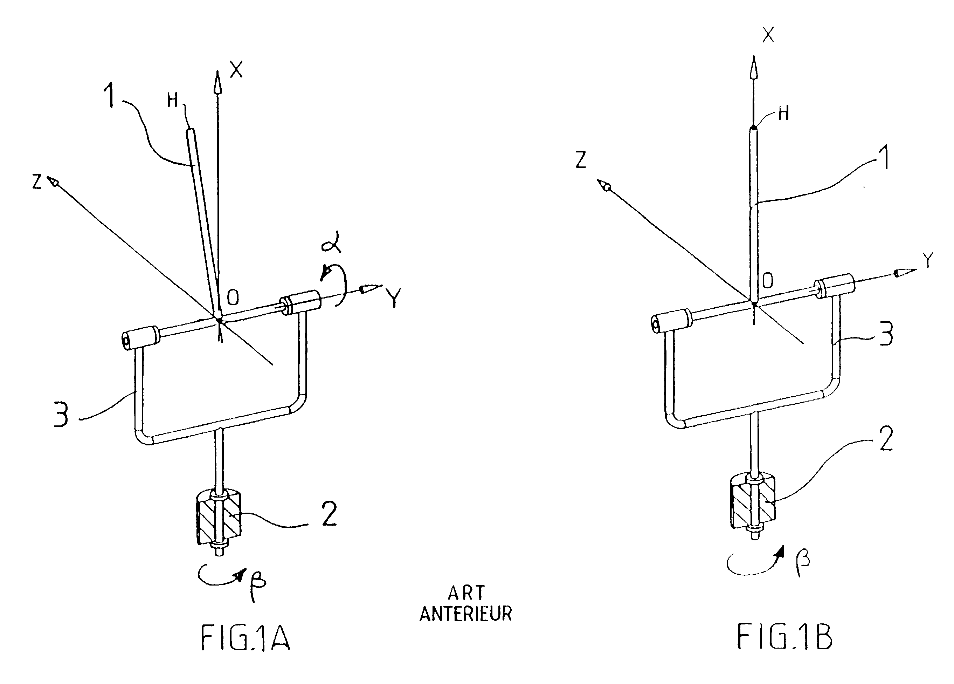

On se réfère maintenant à la figure 1 pour décrire le principe d'une tourelle site-azimut.

Dans un mode de réalisation simplifié, une tourelle site-azimut comprend :
- une pièce fixe ou "pied fixe" 2 représenté dans la figure 1 sous la forme d'un cylindre creux pour loger une pièce intermédiaire 3,
- la pièce intermédiaire 3, aussi appelée "moyens de transmission" qui se présente sous la forme d'un arbre commun se séparant en deux bras symétriques. Cette pièce intermédiaire 3 est montée en rotation de premier axe X et de premier angle β dans le pied fixe 2 et comporte des moyens de butée pour empêcher un mouvement de translation suivant l'axe X. Ses deux bras portent chacun en leur extrémité une articulation (un logement cylindrique circulaire, dans l'exemple représenté) sur lesquelles est montée une pièce terminale 1, et
- la pièce terminale 1, pouvant être animée d'un autre mouvement de rotation de second axe Y et de second angle α par rapport à la pièce intermédiaire 3 et autour des articulations que celle-ci comprend.

Les deux axes de rotation X et Y sont perpendiculaires et se coupent en O.

Au cours du premier mouvement de rotation d'angle β, le point H sur l'extrémité supérieure de la pièce terminale 1, décrit un cercle dont le centre appartient à l'axe X. Au cours du second mouvement de rotation d'angle α, le point H décrit un cercle de centre par lequel passe l'axe Y. Au cours des deux mouvements de rotation combinés, le point H décrit une portion de sphère creuse de centre O. Plus précisément, une demi-droite d'origine O et passant par le point H, décrit au cours des mouvements, un cône de pointage incluant une portion de sphère d'axe X.

Il apparaît alors que si, au cours du second mouvement de rotation d'angle α, la droite (OH) coïncide avec l'axe X, la surface décrite par le point H au cours du mouvement de rotation d'axe X et d'angle β est quasi-nulle, comme le montre la figure 1B. Cette situation correspond au point mort de la tourelle site-azimut, dans laquelle la demi-droite d'origine O et passant par H ne peut pas se déplacer dans le plan OXY.

Par ailleurs, il apparaît également qu'une liaison par câble entre la pièce terminale 1 et le pied fixe 2, nécessiterait un collecteur ou un raccord tournant.

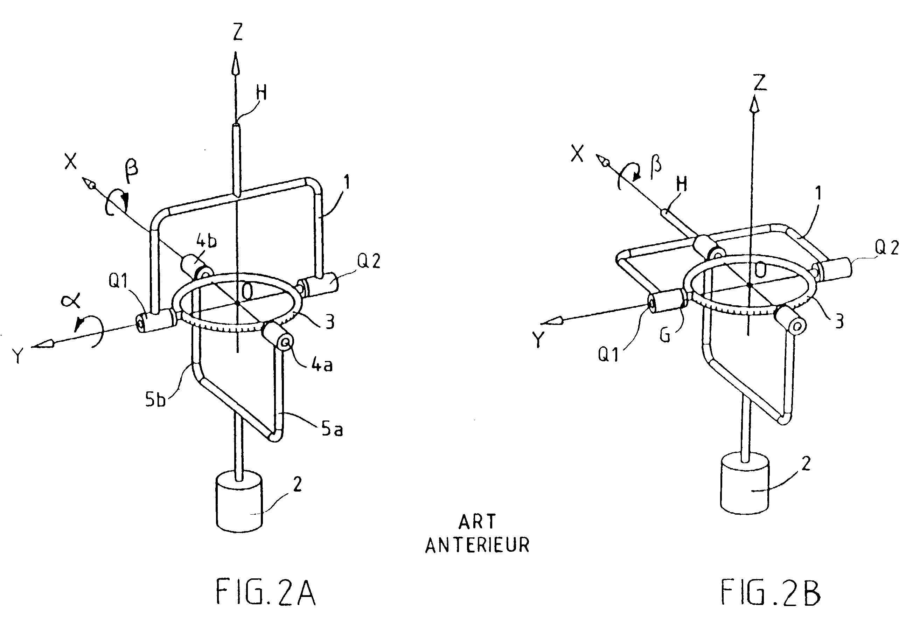

On se réfère maintenant à la figure 2 pour décrire le principe d'une suspension de Cardan.

Dans un mode de réalisation simplifié, une suspension de Cardan comprend :
- un pied fixe 2, solidaire de deux bras symétriques fixes appelés aussi "moyens de support" 5a et 5b, portant respectivement un premier logement 4a et un second logement 4b, appelés aussi "moyens de fixation" (cylindriques creux dans l'exemple représenté),
- une pièce intermédiaire 3, aussi appelée "moyens de transmission", montée en rotation de premier axe X et d'angle β dans les premier 4a et second 4b logements, et portant une première articulation Q1 et/ou une seconde articulation Q2 (logements cylindriques creux Q1 et Q2 dans l'exemple représenté),
- une pièce terminale 1, montée en rotation de second axe Y et d'angle α par rapport à la pièce intermédiaire 3, autour des première Q1 et seconde Q2 articulations.

Les deux axes de rotation X et Y sont à nouveaux perpendiculaires et se coupent au point O. Au cours des deux mouvements de rotation combinés d'angles β et α, le point H décrit une portion de sphère creuse de centre O. Plus précisément, une demi-droite d'origine O et passant par le point H, décrit au cours des mouvements, un cône de pointage incluant une portion de sphère de centre O.

Il apparaît alors que si, au cours du second mouvement de rotation d'angle α, la droite (OH) coïncide avec l'axe X, la surface décrite par le point H au cours du mouvement de rotation d'axe X et d'angle β est quasi-nulle, comme le montre la figure 2B. La droite (OH) ne peut pas, dans ce cas, se déplacer dans le plan OXY. On remarque également que si la droite (OG) de la figure 2B où G est un point de l'une des articulations Q1 ou Q2, coïncide avec l'axe Z au cours d'un mouvement de rotation d'angle β, la droite (OH) ne peut se déplacer dans le plan OXZ. Ces deux situations correspondent aux deux points morts de la suspension de Cardan, disposés de part et d'autre du point O sur l'axe X.

Par contre, une liaison par câble entre le point H par exemple, de la pièce terminale 1 et le pied fixe 2 ne nécessite pas dans ce cas, un collecteur ou un raccord tournants, si ce câble passe par le point O.

Ce point avantageux de la suspension de Cardan est utilisé par la présente invention, dans la mesure où celle-ci vise à obtenir un mécanisme à deux mouvements de rotation indépendants s'apparentant à une suspension de Cardan, mais qui ne présente pas de point mort.

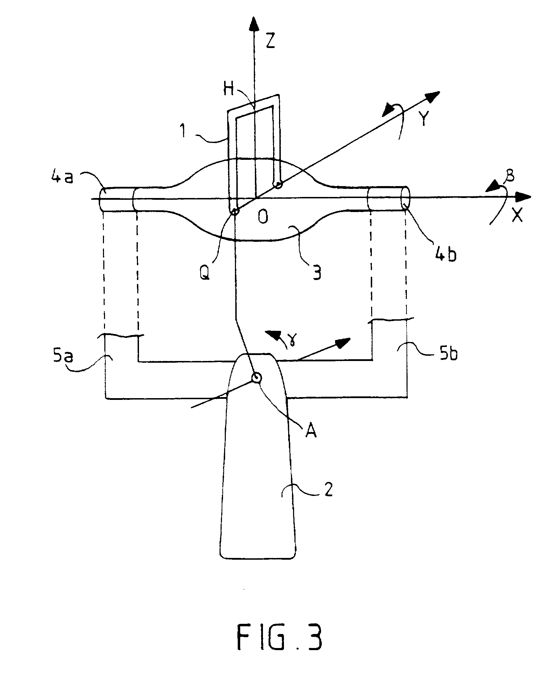

On se réfère maintenant à la figure 3 pour décrire schématiquement le principe d'un tel mécanisme, selon l'invention.

Comme dans un mécanisme du type suspension de Cardan, le mécanisme à deux mouvements de rotation selon l'invention comprend:
- un pied fixe 2, portant une pièce en forme de U appelée "moyens de support",
- un premier bras 5a et un second bras 5b, qui forment les deux parties supérieures de cette pièce en U, et portant en leur extrémité respectivement un premier 4a et un second 4b logements cylindriques circulaires creux appelés aussi "moyens de fixation",
- une pièce intermédiaire 3 appelée aussi "moyens de transmission", montée en rotation de premier axe X et d'angle β dans les premier 4a et second 4b logements, et comportant une articulation Q, et
- une pièce terminale 1, montée en rotation de second axe Y et d'angle α sur la pièce intermédiaire 3, autour de l'articulation Q.

Selon l'invention, le pied fixe 2 comporte une articulation A autour de laquelle le bas de la pièce en U au moins, peut pivoter d'un troisième angle γ, autour d'un axe parallèle au second axe Y. Ainsi, le premier axe X subit un mouvement de rotation d'axe parallèle au second axe Y, et d'angle γ, les deux axes X et Y restant invariablement perpendiculaires et concourants au point O au cours des mouvements du mécanisme. Par la suite, seront décrits des modes différents de réalisation de l'invention pour faire en sorte que le point O reste immobile au cours des mouvements de rotation du mécanisme, ce qui permet aux moyens de fixation 4a et 4b d'avoir des trajectoires circulaires autour de l'axe Y. Le premier axe X peut alors pivoter autour du second axe Y.

Par ailleurs, l'invention propose plusieurs modes de réalisation dans lesquels les deux articulations A et Q (ou Q1 et Q2) sont couplées mécaniquement, ou asservies par des moyens qui seront décrits par la suite, de manière à ce que le troisième angle γ soit égal au second angle α. Ainsi, on obtient un mécanisme à deux mouvements de rotation indépendants d'angle β et α.

Dans ces conditions, le mécanisme ne présente plus de point mort. En effet, il apparaît que dans un repère fixe OXYZ lié au pied fixe 2, si la droite (OH) coïncide avec l'axe X de ce repère au cours d'un mouvement de rotation d'angle α de la pièce terminale 1 et des moyens de fixation 4a et 4b (γ=α), la droite (OH) peut maintenant se déplacer dans le plan OXY ou dans le plan OXZ. Les trajectoires respectives des points de la pièce terminale 1 et notamment du point H, sont d'amplitude non nulle au cours des mouvements du mécanisme.

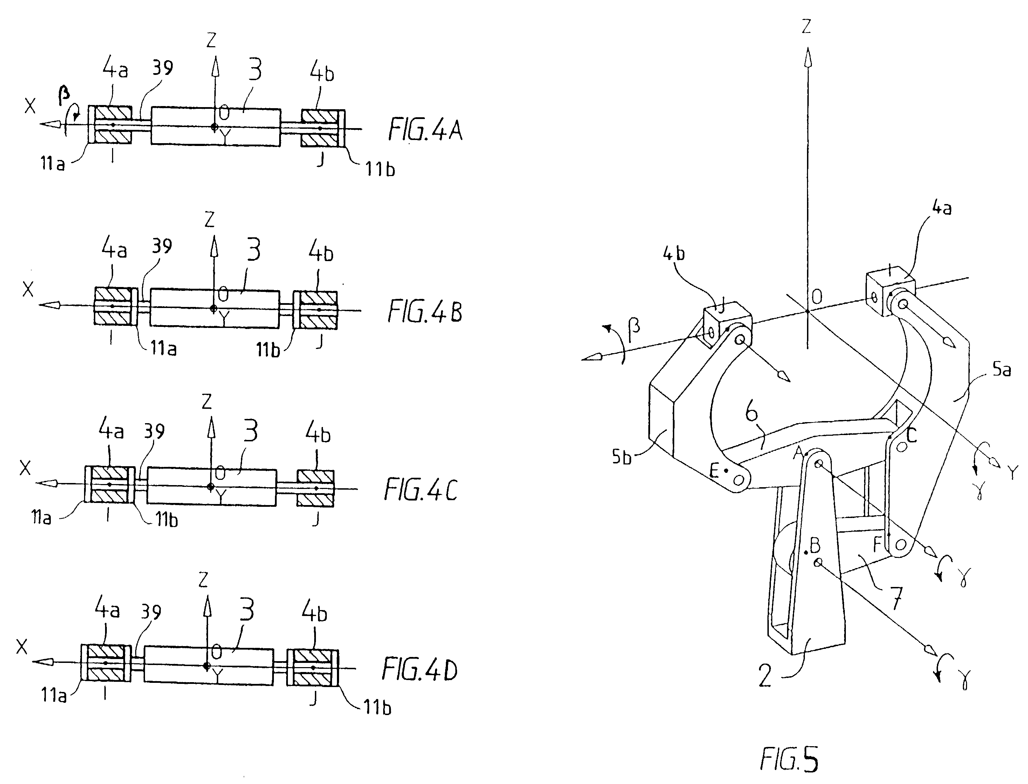

On se réfère maintenant à la figure 4 pour décrire la liaison rotoïde d'angle β entre les moyens de transmission et les moyens de fixation, selon l'invention.

La pièce intermédiaire 3 ou "moyens de transmission" est solidaire d'une tige cylindrique circulaire 39 montée en rotation d'axe X et d'angle β, dans des logements homologues respectifs que comprennent les moyens de fixation 4a et 4b. Dans l'exemple, ces logements se présentent sous forme de blocs respectifs 4a et 4b comportant chacun une partie cylindrique creuse, et assurent donc le guidage en rotation de la tige 39. Avantageusement, ces blocs 4a et 4b ou la tige 39 elle-même, comportent en outre, des moyens de butée 11a et 11b pour empêcher un mouvement de translation de la tige 39 suivant l'axe X, tout en autorisant un mouvement de rotation autour de cet axe.

Ainsi, la pièce intermédiaire 3 peut être arrêtée en translation suivant l'axe X,
- soit unilatéralement par les blocs 4a et 4b, comme le montrent les figures 4A et 4B,
- soit bilatéralement par l'un des blocs 4a ou 4b, comme le montre la figure 4C,
- soit bilatéralement par les deux blocs 4a et 4b, de manière hyperstatique, comme le montre la figure 4D.

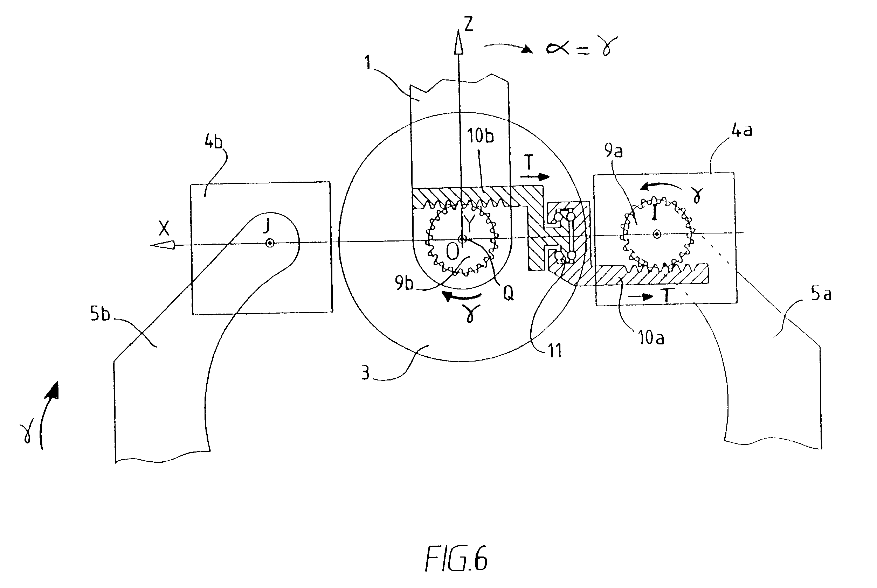

La description ci-après fait état de l'un des modes de réalisation de l'invention pour faire en sorte que le point O reste immobile au cours des mouvements du mécanisme. On se réfère alors à la figure 5 qui illustre les moyens de support d'un tel mécanisme, selon ce premier mode de réalisation.

Sur la figure 5 est représenté un mécanisme dit "à pantographe", dont le principe est le suivant :
- les leviers 6 et 7 sont articulés par des liaisons rotoïdes d'axes parallèles à l'axe Y et passant par les points distincts A et B, disposés sur l'axe Z d'un même côté par rapport à O,
- le bras 5b est articulé sur le levier 6 et sur le bloc 4b par des liaisons rotoïdes d'axes parallèles à Y et passant respectivement par les points distincts E et J situés dans le plan OXZ,
- le bras 5a est articulé sur les leviers 6 et 7 et sur le bloc 4a par des liaisons rotoïdes d'axes parallèles à Y passant respectivement par les points distincts C, F et I situés dans le plan OXZ.

Le mécanisme à pantographe représenté sur la figure 5 vérifie les conditions suivantes:
- les points A, C et E sont alignés,
- les points I, C et F sont alignés,
- les quadrilatères ABFC et ICEJ sont des parallélogrammes, et
- les distances IC, JE et OA sont égales.

Dans ces conditions :
- d'une part, les points I et J décrivent des trajectoires circulaires d'axe Y, et
- d'autre part, les rotations autour des articulations A, B, I et J des leviers 6 et 7 et des blocs 4a et 4b, respectivement, sont d'amplitude identique γ.

Ainsi, une rotation d'angle γ autour de l'articulation A induit une rotation de même angle de l'axe X autour de l'axe Y, et en particulier des moyens de fixation 4a et 4b respectivement autour des articulations I et J.

On se réfère maintenant à la figure 6 pour décrire, selon le premier mode de réalisation de l'invention, les moyens permettant un couplage mécanique entre l'une des articulations I ou J et l'articulation Q, pour assurer donc la relation cinématique entre γ et α : α = γ.

Un premier pignon 9a est monté sur l'articulation I dans l'exemple décrit. Il est solidaire du bras 5a, et fixe par rapport à celui-ci. Au cours d'un mouvement de rotation d'angle γ autour de l'articulation A, le bloc 4a peut être alors animé d'un mouvement de rotation d'axe parallèle à Y et d'angle γ, par rapport au pignon 9a et autour de l'articulation I. Le pignon 9a est donc en mouvement de rotation relatif d'angle opposé à γ par rapport au bloc 4a.

Le bloc 4a comprend une première crémaillère 10a engrenée au premier pignon 9a. Le mouvement de rotation de ce dernier, d'angle -γ, entraîne un mouvement de translation T de la première crémaillère 10a.

Les moyens de transmission 3 comprennent une seconde crémaillère 10b solidaire de la première crémaillère 10a, de sorte que la seconde crémaillère 10b soit en mouvement de translation T identique à celui de la première crémaillère 10a. Les moyens de transmission 3 comprennent en outre, un second pignon 9b monté sur l'articulation Q, engrené avec la seconde crémaillère de sorte que la translation de la seconde crémaillère 10b induise un mouvement de rotation de ce second pignon 9b qui est solidaire de la pièce terminale 1, et fixe par rapport à celle-ci.

La première crémaillère 10a et la seconde crémaillère 10b sont disposées de part et d'autre de l'axe X de manière à inverser les rotations relatives du premier pignon 9a par rapport au second pignon 9b. Les diamètres respectifs des premier 9a et second 9b pignons sont identiques. Une rotation d'angle -γ du premier pignon 9a par rapport aux moyens de fixation 4a induit donc une rotation d'angle γ de la pièce terminale 1 par rapport aux moyens de transmission 3.

Ainsi, au cours d'un mouvement de rotation d'angle γ autour de l'articulation A, la pièce terminale 1 est animée d'un mouvement de rotation d'angle α égal à l'angle γ, par rapport aux moyens de transmission 3. Une butée tournante 11 supprimant la translation relative des crémaillères 10a et 10b suivant l'axe X, assure que la relation α = γ est indépendante de β.

Selon l'exemple illustré par la figure 6 et décrit ci-dessus, l'articulation Q coopère avec l'articulation I. Mais il est clair qu'un résultat identique est obtenu si l'articulation Q coopère plutôt avec l'articulation J, puisque les deux articulations I et J gèrent des mouvements symétriques. Le pignon 9a serait alors solidaire du second bras 5b et monté sur l'articulation J.

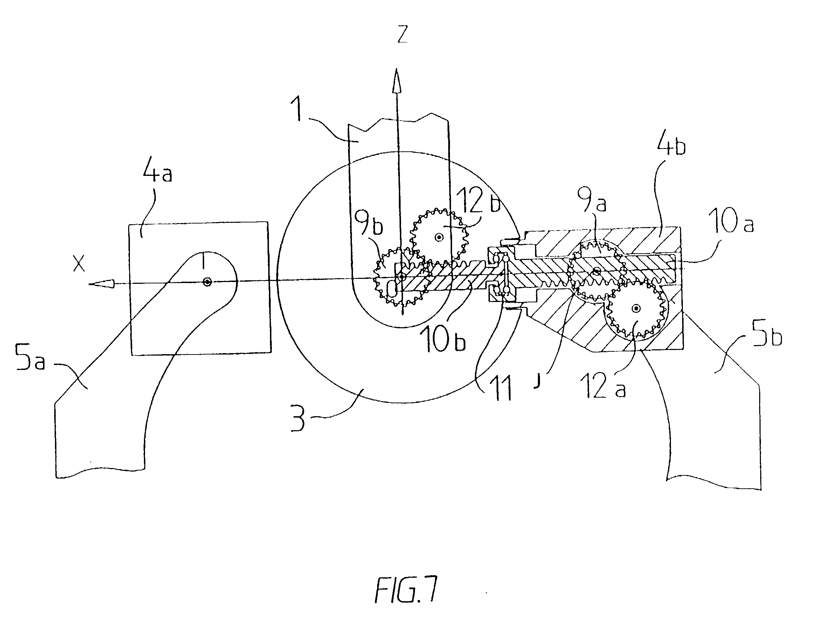

On se réfère maintenant à la figure 7 pour décrire le mécanisme selon un second mode de réalisation de l'invention dans lequel la relation cinématique α = γ est assurée par d'autres moyens de couplage entre l'une des articulations I ou J et l'articulation Q.

Le second mode de réalisation illustré sur la figure 7 est semblable au premier mode décrit ci-dessus. Mais, ici, le premier pignon 9a et la première crémaillère 10a s'engrènent par l'intermédiaire d'un troisième pignon 12a, et le second pignon 9b et la seconde crémaillère 10b s'engrènent par l'intermédiaire d'un quatrième pignon 12b.

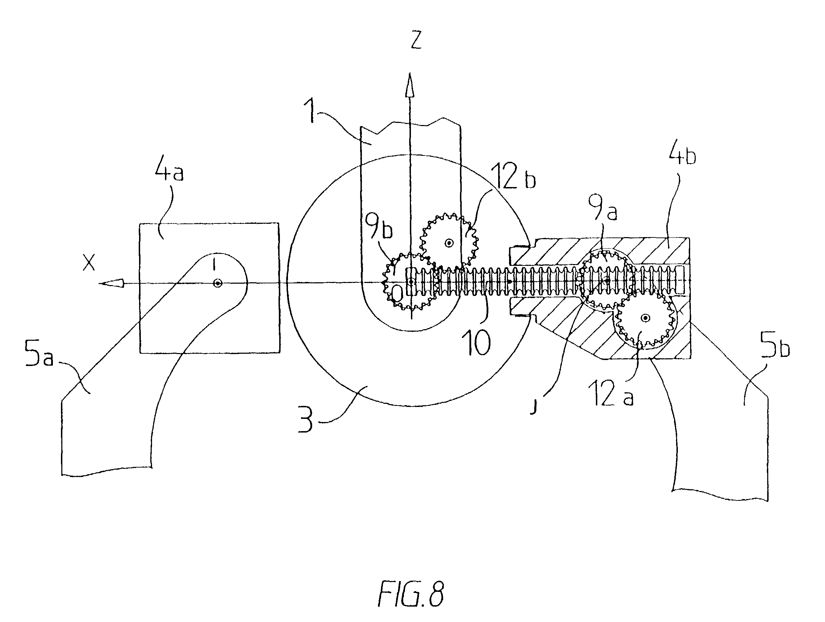

On se réfère maintenant à la figure 8 pour décrire le mécanisme selon un troisième mode de réalisation de l'invention dans lequel la relation cinématique α = γ est assurée par d'autres moyens de couplage entre l'une des articulations I ou J et l'articulation Q.

Le troisième mode de réalisation illustré sur la figure 8 est semblable au second mode. Mais ici, les deux crémaillères 10a et 10b sont remplacées par une crémaillère unique 10, cylindrique circulaire d'axe de révolution X, qui s'engrène avec les troisième 12a et quatrième 12b pignons. La rotation d'angle β de la pièce intermédiaire 3 autour de l'axe X est sans incidence à nouveau, sur la relation cinématique α = γ.

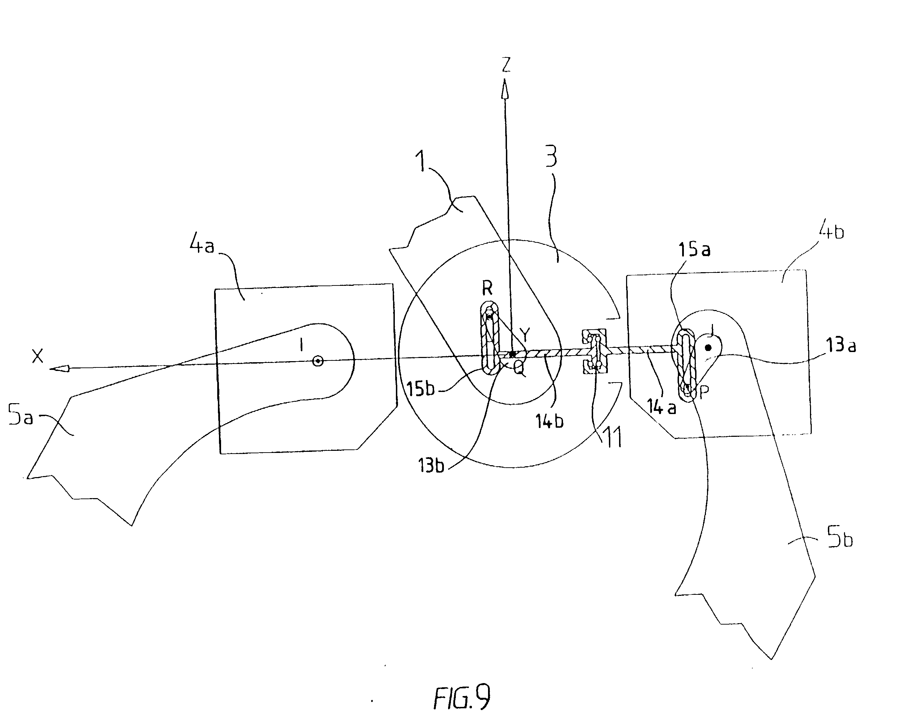

On se réfère maintenant à la figure 9 pour décrire le mécanisme selon un quatrième mode de réalisation de l'invention dans lequel la relation cinématique α = γ est assurée par d'autres moyens de couplage encore, entre l'une des articulations I ou J et l'articulation Q.

Dans ce quatrième mode de réalisation illustré sur la figure 9, la liaison entre les articulations Q et J ne contient plus d'engrenage. En effet, une première bielle 13a solidaire du bras 5b et fixe par rapport à celui-ci, est montée sur l'articulation J. Cette bielle 13a comporte une autre articulation P logée dans une coulisse 15a solidaire d'une tige 14a. Ainsi, une rotation d'angle γ autour de l'articulation A entraîne un mouvement de rotation relatif de la bielle 13a d'angle -γ par rapport aux moyens de fixation 4b, autour de l'articulation J. Il s'en suit alors un mouvement de translation selon l'axe X de la coulisse 15a et de la tige 14a.

La tige 14a est liée par une butée tournante 11 à une seconde tige 14b solidaire d'une seconde coulisse 15b que comprennent les moyens de transmission 3. Une seconde bielle 13b, solidaire de la pièce terminale 1, et fixe par rapport à celle-ci, est montée sur l'articulation Q. Elle comporte une seconde articulation R logée dans la seconde coulisse 15b. Les deux coulisses 15a et 15b sont disposées de part et d'autre de l'axe X pour inverser les rotations relatives des deux bielles 13a et 13b. Les distances JP et QR sont égales.

Ainsi, une rotation d'angle γ autour de l'articulation A entraîne un mouvement de rotation de la bielle 13b et de la pièce terminale 1 d'angle γ par rapport aux moyens de transmission 3, autour de l'articulation Q. La rotation d'angle β de la pièce intermédiaire 3 autour de l'axe X est sans incidence sur la relation cinématique α = γ. Elle est assurée par le fait que la butée 11 entre les tiges 14a et 14b soit tournante.

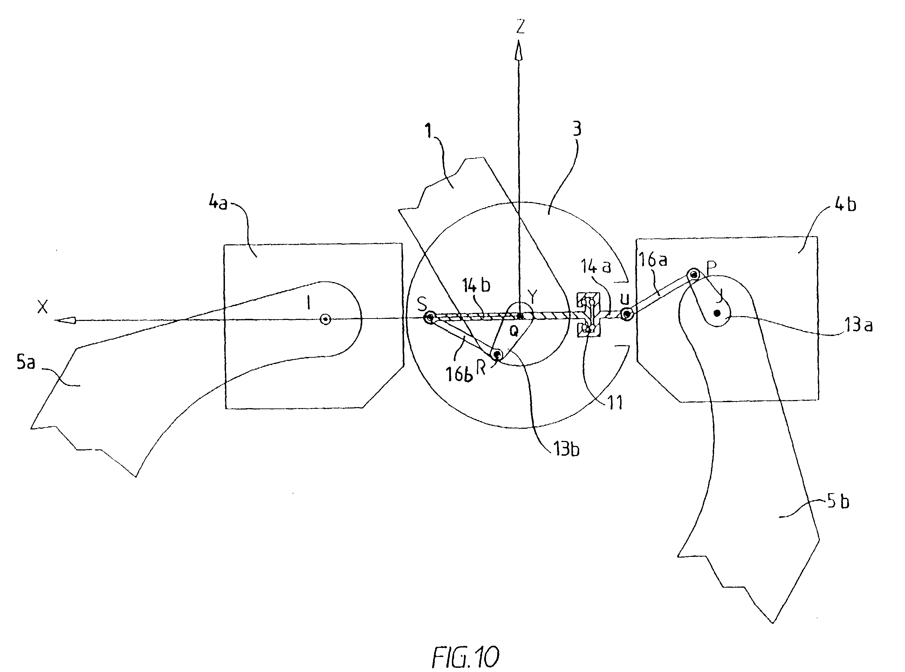

On se réfère maintenant à la figure 10 pour décrire le mécanisme selon un cinquième mode de réalisation de l'invention, dans lequel on utilise un autre type de liaison à bielles pour le couplage entre l'une des articulations I ou J et l'articulation Q.

Dans ce cinquième mode de réalisation illustré sur la figure 10, les deux tiges 14a et 14b pouvant être en translation suivant l'axe X, ne portent plus de coulisses. En effet, dans ce mode de réalisation, ces deux tiges 14a et 14b sont liées respectivement à un troisième bras 16a et un quatrième bras 16b, par l'intermédiaire respectivement, d'une onzième U et d'une douzième S articulations. Les deux bras 16a et 16b ont même longueur, et les neuvième P et dixième R articulations sont disposées de part et d'autre de l'axe X.

Ainsi, une rotation d'angle -γ de la première bielle 13a entraîne une translation de l'articulation U, des tiges 14a et 14b et de l'articulation S, ainsi qu'une rotation d'angle γ de la pièce terminale 1, solidaire de la seconde bielle 13b.

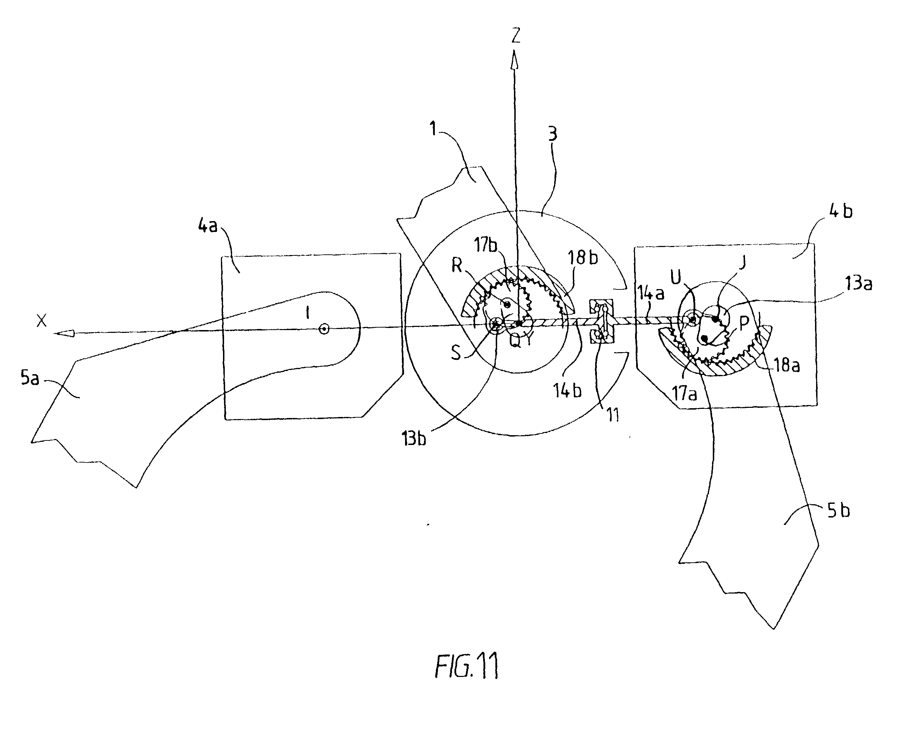

On se réfère maintenant à la figure 11 pour décrire le mécanisme selon un sixième mode de réalisation de l'invention, dans lequel on emploie des moyens d'engrenage couplés à des bielles pour la liaison entre l'une des articulations I ou J et l'articulation Q.

Dans ce sixième mode de réalisation illustré sur la figure 11, un premier secteur denté 18a, de centre confondu avec l'articulation J, est solidaire du bras 5b (ou du bras 5a). Il est engrené avec un premier pignon 17a de diamètre valant la moitié du diamètre du premier secteur 18a. Le premier pignon 17a est articulé en son centre avec une première bielle 13a, autour d'une neuvième articulation P. Ce premier pignon 17a comporte en l'une de ses extrémités une onzième articulation U, sur laquelle est montée la tige 14a.

Ainsi, une rotation d'angle γ de l'axe X entraînée par une rotation d'angle γ autour de l'articulation A, occasionne une rotation d'angle -γ du premier secteur denté 18a, par rapport aux moyens de fixation 4b (ou 4a). Le pignon 17a subit une rotation de même angle, et comme le diamètre du pignon 17a vaut la moitié de celui du secteur 18a, il s'en suit un mouvement de translation suivant l'axe X, de l'articulation U et de la tige 14a.

La tige 14a est liée à la tige 14b par la butée tournante 11. La tige 14b est articulée sur l'une des extrémités S d'un second pignon 17b, de même diamètre que celui du premier pignon 17a. Le second pignon 17b engrène avec un second secteur denté 18b, de diamètre valant le double de celui du second pignon 17b, et de centre confondu avec l'articulation Q. Le second pignon 17b est articulé en son centre R avec la seconde bielle 13b. Les deux secteurs dentés 18a et 18b sont disposés de part et d'autre de l'axe X, la partie dentée de l'un étant en regard de la partie dentée de l'autre.

Ainsi, une translation suivant X de la tige 14a entraîne une translation identique de la tige 14b, laquelle entraîne une rotation du second pignon 17b et du second secteur denté 18b autour de l'axe Y. Le fait que les premier 17a et second 17b pignons d'une part, et les premier 18a et second 18b secteurs d'autre part, aient même diamètre, et que les bielles 13a et 13b aient même longueur, assure qu'une rotation d'angle -γ du premier secteur 18a, occasionne une rotation d'angle γ de la pièce terminale 1.

Dans ces différents modes de réalisation, des moyens de butée peuvent être utilisés pour empêcher une translation radiale suivant l'axe Z des troisième 14a et quatrième 14b tiges, ou des première 10a et seconde 10b crémaillères.

On se réfère maintenant à la figure 12A pour décrire le mécanisme selon un septième mode de réalisation de l'invention, dans lequel le couplage entre l'articulation A et l'articulation Q est assuré maintenant par un asservissement électrique ou électronique connu en soi, de la rotation de la pièce terminale 1 par rapport à la rotation autour de l'articulation A.

Dans ce septième mode de réalisation illustré sur la figure 12A, un premier capteur de position angulaire 33 détecte une rotation d'angle relatif γ au niveau de l'articulation B dans l'exemple décrit, les rotations des tiges 6 et 7 autour des articulations A et B étant équivalentes. Le premier capteur 33 transmet cette information à un boîtier de commande 36. Parallèlement, un second capteur de position angulaire 34 détecte une rotation d'angle relatif α au niveau de l'articulation Q, et transmet cette information au boîtier de contrôle et de commande 36. A partir des informations délivrées par les capteurs 33 et 34, l'unité de contrôle et de commande 36 assure l'asservissement en position d'un actionneur 35 afin que directement ou indirectement, la condition α = γ soit vérifiée. L'actionneur 35, rotatif ou linéaire, peut utiliser des sources d'énergies diverses, électrique ou hydraulique par exemple.

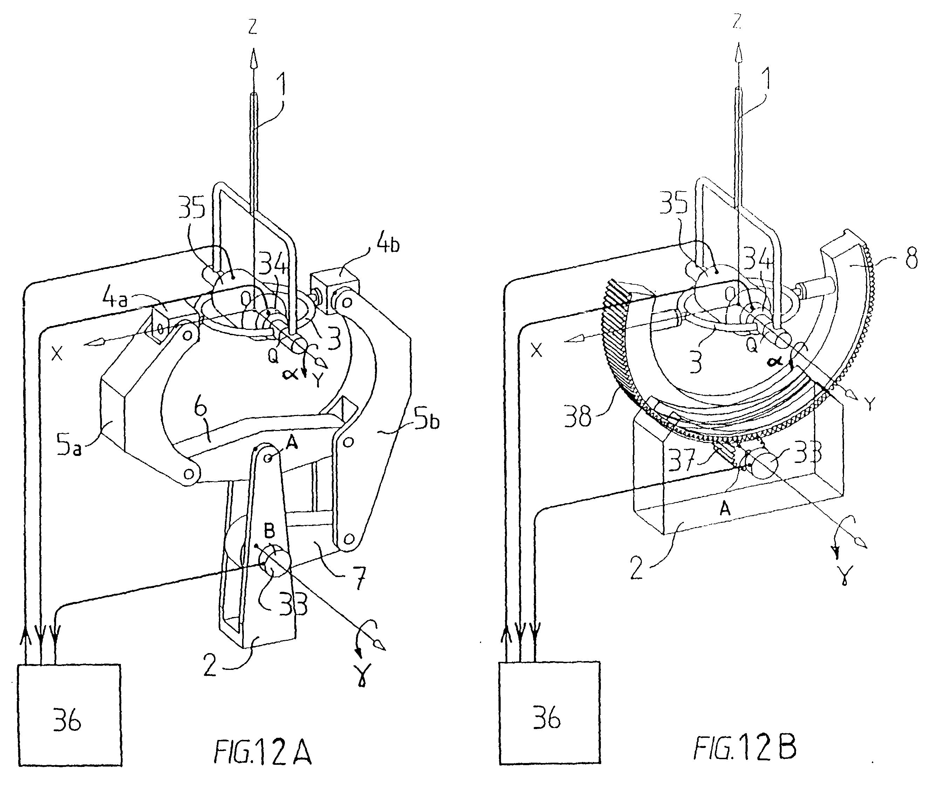

La figure 12B représente un mécanisme selon l'invention, suivant un huitième mode de réalisation qui met également en oeuvre deux capteurs de position angulaire 33 et 34, mais qui diffère du septième mode de réalisation au niveau des moyens de support employés.

Dans ce dernier mode de réalisation, au lieu d'utiliser un mécanisme à pantographe, une portion de roue dentée 8 de centre confondu avec le point O est engrenée avec un pignon 37 en rotation d'angle γ sur l'articulation A. Ainsi, l'axe X peut pivoter d'un angle égal à α autour de l'axe Y. Dans ce mode de réalisation, un premier 33 et un second 34 capteurs de position angulaire, respectivement sur les articulations A et Q, délivrent des informations liées aux déplacements d'angles respectifs γ et α, au boîtier de contrôle et de commande 36 qui assure alors un asservissement par l'actionneur 35 de l'articulation Q, pour respecter la relation α = γ.

Ce dernier mode de réalisation constitue une alternative au mécanisme à pantographe décrit précédemment. Mais il est à noter que d'autres variantes de mécanismes à pantographe peuvent également être envisagées. Par exemple, les deux bras 5a et 5b peuvent chacun être articulés à la seconde tige 7, sans pour autant que le principe du mécanisme soit modifié. On peut également concevoir un mécanisme à pantographe dans lequel les articulations J et E sont disposées du même côté que les articulations I, C et F par rapport à l'axe Z qui passe par les articulations A, B et Q.

Il est clair que les différents modes de réalisation décrits ci-dessus à titre d'exemple uniquement, ne limitent pas la portée de l'invention. Ainsi, tout mécanisme à différentiel à pignons coniques ou droits par exemple, peut être utilisé pour assurer un couplage mécanique entre l'une des articulations I ou J et l'articulation Q.

## Revendications

1. Mécanisme à deux mouvements de rotation indépendants d'une pièce terminale (1) par rapport à une pièce fixe (2), comprenant des moyens de support (5a,5b) solidaires de la pièce fixe (2) et portant des moyens de fixation (4a,4b) dans lesquels sont montés à rotation des moyens de transmission (3) animés d'un premier mouvement de rotation, d'un premier angle β et autour d'un premier axe X, lesdits moyens de transmission (3) portant une première articulation (Q) pour que la pièce terminale (1) soit animée d'un second mouvement de rotation, autour d'un second axe Y perpendiculaire au premier axe X et coupant ce dernier en un premier point O, ledit second mouvement de rotation de la pièce terminale (1) par rapport auxdits moyens de transmission (3) étant d'amplitude égale à un second angle α,
**caractérisé en ce que** lesdits moyens de support (5a,5b) sont au moins en partie, propres à pivoter d'un troisième angle γ autour d'une seconde articulation (A) que comprend la pièce fixe (2), et à entraîner un mouvement circulaire desdits moyens de fixation (4a,4b) autour du second axe Y, de sorte que le premier axe X soit propre à pivoter autour du second axe Y d'une amplitude de rotation égale au troisième angle γ,
et **en ce que** lesdits moyens de support (5a,5b) et lesdits moyens de transmission (3) sont propres à coopérer ensemble pour commander la première articulation (Q), de sorte qu'une rotation d'une partie au moins des moyens de support (5a,5b) autour de la seconde articulation (A), induise une rotation de la pièce terminale (1) par rapport aux moyens de transmission (3) autour de la première articulation (Q), de second angle α lié au troisième angle γ par une fonction prédéterminée,
ce qui permet à tout point de la pièce terminale (1) situé sur une droite passant par le premier point O et perpendiculaire au premier axe X de décrire une trajectoire d'amplitude non nulle au cours des premier et/ou second mouvements de rotation de la pièce terminale (1) par rapport à la pièce fixe (2).

2. Mécanisme selon la revendication 1, **caractérisé en ce que** lesdits moyens de transmission (3) comprennent en outre au moins une tige cylindrique circulaire (39) d'axe de révolution confondu avec le premier axe X, dans un logement homologue d'un bloc (4a) que comprennent les moyens de fixation (4a, 4b).

3. Mécanisme selon la revendication 2, **caractérisé en ce que** des moyens de butée (11a, 11b) sont montés sur la tige cylindrique (39) et/ou sur ledit bloc (4a) pour empêcher un mouvement de translation de la tige cylindrique (39) et des moyens de transmission (3) par rapport aux moyens de fixation (4a,4b), suivant le premier axe X.

4. Mécanisme selon l'une des revendications précédentes, **caractérisé en ce que** lesdits moyens de support (5a,5b) comportent au moins:
- une première tige (6) montée à rotation sur la pièce fixe (2) autour de la seconde articulation (A),
- un premier bras (5a) et un second bras (5b) montés à rotation sur la première tige (6) respectivement autour d'une troisième (C) et d'une quatrième (E) articulations, et portant respectivement une cinquième (I) et une sixième (J) articulations autour desquelles pivotent les moyens de fixation (4a,4b), et
- une seconde tige (7) montée à rotation sur l'un au moins des premier (5a) et second (5b) bras et sur la pièce fixe (2) respectivement autour d'une septième (F) et d'une huitième (B) articulations,
de telle manière que:
- lesdites seconde (A), troisième (C), quatrième (E), cinquième (I), sixième (J), septième (F) et huitième (B) articulations autorisent des mouvements de rotation d'axes respectifs parallèles entre eux et perpendiculaires au premier axe X,
- lesdites première (Q) , seconde (A) , troisième (C), quatrième (E), cinquième (I), sixième (J), septième (F) et huitième (B) articulations occupent dans l'espace des positions respectives qui appartiennent sensiblement à un même plan contenant le premier axe X,
- les seconde (A), troisième (C) et quatrième (E) articulations sont alignées,
- les positions respectives des seconde (A), huitième (B), septième (F) et troisième (C) articulations forment un parallélogramme,
- les positions respectives des cinquième (I), sixième (J), quatrième (E) et troisième (C) articulations forment un parallélogramme,
- les cinquième (I) et troisième (C) articulations sont espacées d'une distance égale à une distance séparant les sixième (J) et quatrième (E) articulations, et à une distance séparant les première (Q) et seconde (A) articulations,
de sorte qu'un mouvement de rotation de troisième angle γ, autour de la seconde articulation (A) entraîne un mouvement de rotation de troisième angle γ du premier axe X autour du second axe Y, et un pivotement des moyens de fixation (4a,4b) par rapport aux premier (5a) et second (5b) bras, autour des cinquième ( I ) et sixième (J) articulations, de troisième angle γ.

5. Mécanisme selon la revendication 4, **caractérisé en ce que** ladite première articulation (Q) est liée à l'une des cinquième (I) ou sixième (J) articulations, par des moyens de couplage (9a,9b,10a,10b,11) pour qu'une rotation de troisième angle γ desdits moyens de fixation (4a,4b) autour des cinquième (I) et/ou sixième (J) articulations induise ledit second mouvement de rotation autour de la première articulation (Q), de second angle α, de la pièce terminale (1) par rapport aux moyens de transmission (3).

6. Mécanisme selon la revendication 5, **caractérisé en ce que** ledit second angle α est sensiblement égal audit troisième angle γ.

7. Mécanisme selon la revendication 6, **caractérisé en ce que** les moyens de couplage (9a,10a,9b,10b,11) comprennent:
- un premier (9a) et un second (9b) pignons de diamètres respectifs identiques, montés à rotation respectivement sur les moyens de fixation (4a,4b) et sur les moyens de transmission (3), autour de l'une des cinquième ( I ) ou sixième (J) articulations et de la première articulation (Q), et solidaires respectivement de l'un des premier (5a) ou second (5b) bras et de la pièce terminale (1), respectivement pour qu'un mouvement de rotation de troisième angle γ du premier axe X autour du second axe Y induise un mouvement de rotation d'un angle opposé au troisième angle γ du premier pignon (9a) par rapport auxdits moyens de fixation (4a,4b) autour de l'une des cinquième (I) ou sixième (J) articulations, et pour qu'un mouvement de rotation de second angle α du second pignon (9b) entraîne ledit second mouvement de rotation de second angle α de la pièce terminale (1) par rapport auxdits moyens de transmission (3), autour de la première articulation (Q), et
- des moyens d'engrenage (10a, 10b, 11) entre lesdits premier (9a) et second (9b) pignons pour qu'un mouvement de rotation d'angle opposé au troisième angle γ du premier pignon (9a) induise un mouvement de rotation du second pignon (9b) de second angle α égal au troisième angle γ.

8. Mécanisme selon la revendication 7, **caractérisé en ce que** lesdits moyens d'engrenage (10a,10b,11) comprennent une première (10a) et une seconde (10b) crémaillères parallèles au premier axe X et disposées de part et d'autre de celui-ci, engrenées respectivement aux premier (9a) et second (9b) pignons et solidarisées l'une à l'autre par des moyens de butée tournants (11) pour empêcher un mouvement de translation de la seconde crémaillère (10b) par rapport à la première crémaillère (10a) suivant le premier axe X, tout en autorisant un mouvement de rotation de premier angle β du second pignon (9b) et de la seconde crémaillère (10b) autour du premier axe X,
de sorte qu'un mouvement de rotation d'angle opposé au troisième angle γ du premier pignon (9a) induise des mouvements de translation identiques des première (10a) et seconde (10b) crémaillères suivant le premier axe X, ce qui permet un mouvement de rotation du second pignon (9b) de second angle α égal au troisième angle γ, entraîné par le mouvement de translation de la seconde crémaillère (10b).

9. Mécanisme selon la revendication 8, **caractérisé en ce que** lesdits premier (9a) et second (9b) pignons s'engrènent respectivement aux première (10a) et seconde (10b) crémaillères par l'intermédiaire respectivement de troisième (12a) et quatrième (12b) pignons de diamètres respectifs identiques et situés de part et d'autre du premier axe X.

10. Mécanisme selon la revendication 7, **caractérisé en ce que** lesdits moyens d'engrenage (11,12a,12b) comprennent:
- des troisième (12a) et quatrième (12b) pignons de diamètres respectifs identiques, situés de part et d'autre du premier axe X, et engrenés respectivement aux premier (9a) et second (9b) pignons, et
- une crémaillère cylindrique circulaire (11) d'axe principal confondu avec le premier axe X, engrenée auxdits troisième (12a) et quatrième (12b) pignons, propre à se déplacer selon un mouvement de translation suivant le premier axe X et à pivoter selon un mouvement de rotation de premier angle β autour du premier axe X.

11. Mécanisme selon la revendication 6, **caractérisé en ce que** lesdits moyens de couplage (13a,14a,15a,13b,14b,15b,11) comprennent:
- une première (13a) et une seconde (13b) bielles comportant respectivement une neuvième (P) et une dixième (R) articulations, et montées à rotation respectivement sur lesdits moyens de fixation (4a,4b) et sur lesdits moyens de transmission (3), autour de l'une des cinquième (I) ou sixième (J) articulations et de la première articulations (Q), de sorte que l'une des cinquième (I) ou sixième (J) articulations et la neuvième articulation (P) soient espacées d'une distance sensiblement égale à une distance séparant les première (Q) et dixième (R) articulations, les première (13a) et seconde (13b) bielles étant solidaires respectivement de l'un des premier (5a) ou second (5b) bras et de la pièce terminale (1), respectivement pour qu'un mouvement de rotation de troisième angle γ du premier axe X autour du second axe Y induise un mouvement de rotation d'angle opposé au troisième angle γ de la première bielle (13a) par rapport auxdits moyens de fixation (4a,4b) autour de l'une des cinquième (I) ou sixième (J) articulations, et pour qu'un mouvement de rotation de second angle α de la seconde bielle (13b) entraîne ledit second mouvement de rotation de second angle α de la pièce terminale (1) par rapport auxdits moyens de transmission (3), autour de la première articulation (Q),
- des troisième (14a) et quatrième (14b) tiges propres à coulisser selon un mouvement de translation suivant le premier axe X, solidarisées l'une à l'autre par des moyens de butée tournants (11) pour empêcher un mouvement de translation de la quatrième tige (14b) par rapport à la troisième tige (14a) suivant le premier axe X, tout en autorisant un mouvement de rotation de premier angle β des seconde bielle (13b) et quatrième tige (14b) autour du premier axe X,
- des premiers moyens d'entraînement entre la première bielle (13a) et la troisième tige (14a) pour qu'un mouvement de rotation d'angle opposé audit troisième angle γ de la première bielle (13a) induise un mouvement de translation suivant le premier axe X des troisième (14a) et quatrième (14b) tiges, et
- des seconds moyens d'entraînement entre la quatrième tige (14b) et la seconde bielle (13b) pour qu'un mouvement de translation suivant le premier axe X de la quatrième tige (14b) induise un mouvement de rotation d'angle égal au troisième angle γ de la seconde bielle (13b).

12. Mécanisme selon la revendication 11, **caractérisé en ce que** lesdits premiers et seconds moyens d'entraînement sont réalisés respectivement sous forme de première (15a) et seconde (15b) coulisses, solidaires respectivement des troisième (14a) et quatrième tiges (14b), comportant respectivement un logement homologue aux neuvième (P) et dixième (R) articulations, situées de part et d'autre du premier axe X, et dans lesquelles les neuvième (P) et dixième (R) articulations, respectivement, sont propres à coulisser suivant des axes respectifs perpendiculaires au premier axe X.

13. Mécanisme selon la revendication 11, **caractérisé en ce que** lesdits premiers et seconds moyens d'entraînement sont réalisés respectivement sous forme de troisième (16a) et quatrième (16b) bras, solidaires respectivement des première (13a) et seconde (13b) bielles et montés à rotation respectivement autour des neuvième (P) et dixième (R) articulations, les troisième (16a) et quatrième (16b) bras étant montés à rotation par ailleurs, respectivement autour d'une onzième (U) et d'une douzième (S) articulations que portent les troisième (14a) et quatrième (14b) tiges.

14. Mécanisme selon la revendication 11, **caractérisé en ce que** lesdits premiers et seconds moyens d'entraînement comprennent respectivement des premier (13a) et second (13b) pignons de diamètres respectifs égaux, montés à rotation respectivement sur les neuvième (P) et dixième (R) articulations autour d'axes respectifs parallèles au second axe Y, solidaires respectivement des troisième (14a) et quatrième (14b) tiges par l'intermédiaire d'une onzième (U) et d'une douzième (S) articulations respectivement, et une première (18a) et une seconde (18b) portions de roue dentée de centre respectifs confondus avec les positions occupées par l'une des cinquième (I) ou sixième (J) articulations et de la première articulation (Q), respectivement, et de diamètres respectifs égaux au double du diamètre du premier pignon (17a), solidaires respectivement de l'un des premier (5a) ou second (5b) bras et de la pièce terminale (1), et disposées de part et d'autre du premier axe X, la face dentée de l'une étant en regard de la face dentée de l'autre.

15. Mécanisme selon l'une des revendications 1 à 3, **caractérisé en ce que** lesdits moyens de support (8) comprennent un pignon (37) monté à rotation en son centre sur la pièce fixe (2) autour de ladite seconde articulation (A), et propre à communiquer son mouvement de rotation de troisième angle γ à une couronne dentée (38) de centre confondu avec ledit premier point O, et portant les moyens de fixation (4a,4b) de sorte que le premier axe X soit propre à pivoter autour du second axe Y, d'une amplitude de rotation sensiblement équivalente au troisième angle γ.

16. Mécanisme suivant l'une des revendications 1 à 4 et 15, **caractérisé en ce que** les première (Q) et l'une des seconde (A) , troisième (C), quatrième (E), cinquième (I), sixième (J), septième (F) et huitième (B) articulations comprennent respectivement un premier (33) et un second (34) capteurs de position angulaire reliés à un module de commande (36) propre à gérer la première articulation (Q), de sorte que le second angle α de rotation de la pièce terminale (1) par rapport auxdits moyens de transmission (3), soit sensiblement égal au troisième angle γ de rotation d'une partie au moins des moyens de support (5a,5b) par rapport à la pièce fixe (2) autour de la seconde articulation (A).

## Claims

1. Mechanism with two independent rotation movements of an end piece (1) relative to a fixed piece (2), comprising support means (5a, 5b) rigidly connected to the fixed piece (2) and carrying fixing means (4a, 4b) in which are mounted rotatably transmission means (3) moved in a first rotation movement through a first angle β and about a first axis X, the transmission means (3) carrying a first articulation (Q) in order that the end piece (1) is moved in a second rotation movement about a second axis Y perpendicular to the first axis X and intersecting the same at a first point O, the second rotation movement of the end piece (1) relative to the transmission means (3) being of an amplitude equal to a second angle α, **characterised in that** the support means (5a, 5b) are at least in part capable of pivoting through a third angle γ about a second articulation (A) which the first fixed piece (2) comprises, and of bringing about a circular movement of the fixing means (4a, 4b) about the second axis Y, so that the first axis X is capable of pivoting about the second axis Y with an amplitude of rotation equal to the third angle γ, and **in that** the support means (5a, 5b) and the transmission means (3) are capable of cooperating in order to control the first articulation (Q), so that a rotation of at least part of the support means (5a, 5b) about the second articulation (A) induces rotation of the end piece (1) relative to the transmission means (3) about the first articulation (Q) through a second angle α linked to the third angle γ by a predetermined function, which makes it possible at any point on the end piece (1) located on a straight line passing through the first point O and perpendicular to the first axis X to describe a trajectory of amplitude other than zero during the first and/or second rotation movements of the end piece (1) relative to the fixed piece (2).

2. Mechanism according to claim 1, **characterised in that** the transmission means (3) further comprise at least one circular cylindrical rod (39) with an axis of rotation merging with the first axis X, in an homologous housing of a block (4a) which the fixing means (4a, 4b) comprise.

3. Mechanism according to claim 2, **characterised in that** stop means (11a, 11b) are mounted on the cylindrical rod (39) and/or on the block (4a) in order to prevent translational movement of the cylindrical rod (39) and of the transmission means (3) relative to the fixing means (4a, 4b) along the first axis X.

4. Mechanism according to one of the preceding claims, **characterised in that** the support means (5a, 5b) comprise at least:
- a first rod (6) mounted rotatably on the fixed piece (2) about the second articulation (A),
- a first arm (5a) and a second arm (5b) mounted rotatably on the first rod (6) about a third ( C) and fourth (E) articulation respectively, and carrying a fifth (I) and sixth (J) articulation respectively about which the fixing means (4a, 4b) pivot, and
- a second rod (7) mounted rotatably on at least one of the first (5a) and second (5b) arms and on the fixed piece (2) about a seventh (F) and an eighth (B) articulation respectively, in such a manner that the second (A), third (C), fourth (E), fifth (F), sixth (J), seventh (F) and eighth (B) articulations permit rotations movements of respective axes which are parallel to one another and perpendicular to the first axis X,
- the first (Q), second (A), third (C), fourth (E), fifth (I), sixth (J), seventh (F) and eighth (B) articulations occupy in the space of the respective positions belonging substantially to one and the same plane comprising the first axis (X),
- the second (A), third (C) and fourth (E) articulations are aligned,
- the respective positions of the second (A), eighth (B), seventh (F) and third (C) articulations form a parallelogram,
- the respective positions of the fifth (I), sixth (J), fourth (E) and third (C) articulations form a parallelogram,
- the fifth (I) and third (C ) articulations are spaced by a distance equal to a distance separating the sixth (J) and fourth (E) articulations, and to a distance separating the first (Q) and second (A) articulations, in such a manner that a rotation movement through the third angle γ about the second articulation (A) brings about a rotation movement through the third angle γ of the first axis X about the second axis Y, and pivoting of the fixing means (4a, 4b) relative to the first (5a) and second (5b) arms about the fifth (I) and sixth (J) articulations through the third angle γ.

5. Mechanism according to claim 4, **characterised in that** the first articulation (Q) is connected to one of the fifth (1) or sixth (J) articulations by coupling means (9a, 9b, 10a, 10b, 11) in order that rotation through a third angle γ of the fixing means (4a, 4b) about the fifth (I) and/or sixth (J) articulations induces the second rotation movement about the first articulation (Q) through the angle α of the end piece (1) relative to the transmission means (3).

6. Mechanism according to claim 5, **characterised in that** the second angle α is substantially equal to the third angle γ.

7. Mechanism according to claim 6, **characterised in that** the coupling means (9a, 9b, 10a, 10b, 11) comprise:
- a first (9a) and second (9b) pinion of identical diameters which are mounted rotatably respectively on the fixing means (4a, 4b) and on the transmission means (3) about one of the fifth (I) or sixth (J) articulations and the first articulation (Q), and which are respectively rigidly connected to one of the first (5a) or second (5b) arms and the end piece (1), respectively in order that a rotation movement through a third angle y of the first axis X about the second axis Y induces a rotation movement through an angle opposite to the third angle γ of the first pinion (9a) relative to the fixing means (4a, 4b) about one of the fifth (I) or sixth (J) articulations, and in order that a rotation movement through the second angle α of the second pinion (9b) brings about the second rotation movement through the second angle α of the end piece (1) relative to the transmission means (3) about the first articulation (Q), and
- gear means (10a, 10b, 11) between the first (9a) and second (9b) pinions in order that a rotation movement through the angle opposite to the third angle γ of the first pinion (9a) induces a rotation movement of the second pinion (9b) through the second angle α equal to the third angle γ.

8. Mechanism according to claim 7, **characterised in that** the gear means (10a, 10b, 11) comprise a first (10a) and a second (10b) rack parallel to the first axis X and disposed on either side thereof, meshed respectively with the first (9a) and second (9b) pinions and rigidly connected to one another by rotary stop means (11) in order to prevent translational movement of the second rack (10b) relative to the first rack (10a) along the first axis X, whilst permitting rotation movement through the first angle β of the second pinion (9b) and of the second rack (10b) about the first axis X, in such a manner that a rotation movement through an angle opposite to the third angle γ of the first pinion (9a) induces identical translational movements of the first (10a) and second (10b) racks along the first axis X, which permits a rotation movement of the second pinion (9b) through the second angle α equal to the third angle γ, driven by the translational movement of the second rack (10b).

9. Mechanism according to claim 8, **characterised in that** the first (9a) and second (9b) pinions mesh respectively with the first (10a) and second (10b) racks via the third (12a) and fourth (12b) pinions respectively, each having identical diameters and being located on either side of the first axis X.

10. Mechanism according to claim 7, **characterised in that** the gear means (11, 12a, 12b) comprise:
- third (12a) and fourth (12b) pinions of identical diameters located on either side of the first axis X and meshing respectively with the first (9a) and second (9b) pinions, and
- a circular cylindrical rack (11) whose main axis merges with the first axis X and which meshes with the third (12a) and fourth (12b) pinions, is displaceable in a translational movement along the first axis X and is pivotable in a rotation movement through the first angle β about the first axis X.

11. Mechanism according to claim 6, **characterised in that** the coupling means (13a, 14a, 15a, 13b, 14b, 15b, 11) comprise:
- a first (13a) and a second (13b) con-rod respectively comprising a ninth (P) and a tenth (R) articulation and being mounted rotatably respectively on their fixing means (4a, 4b) and on the transmission means (3), about one of the fifth (I) or sixth (J) articulations and the first articulation (Q), in such a manner that one of the fifth (I) or sixth (J) articulations and the ninth articulation (P) are spaced at a distance substantially equal to a distance separating the first (Q) and tenth (R) articulations, the first (13a) and second (13b) con-rods being respectively rigidly connected to one of the first (5a) or second (5b) arms and the end piece (1) respectively in order that a rotation movement through the third angle γ of the first axis X about the second axis Y induces a rotation movement through an angle opposite to the third angle γ of the firs con-rod (13a) relative to the fixing means (4a, 4b) about one of the fifth (I) or sixth (J) articulations, and in order that a rotation movement of the second angle α of the second con-rod (13b) brings about the second rotation movement through a second angle α of the end piece (1) relative to the transmission means (3) about the first articulation (Q),
- third (14a) and fourth (14b) rods slidable in a translational movement along the first axis X and rigidly connected to one another by rotary stop means (11) in order to prevent translational movement of the fourth rod (14b) relative to the third rod (14a) along the first axis X, whilst permitting a rotation movement through the first angle β of the second con-rod (13b) and the fourth rod (14b) about the first axis X,
- first drive means between the first con-rod (13a) and the third rod (14a) in order that a rotation movement through an angle opposite to the third angle γ of the first con-rod (13a) induces a translational movement along the first axis X of the third (14a) and fourth (14b) rods, and
- second drive means between the fourth rod (14b) and the second con-rod (13b) in order that a translational movement along the first axis X of the fourth rod (14b) induces a rotation movement through an angle equal to the third angle γ of the second con-rod (13b).

12. Mechanism according to claim 11, **characterised in that** the first and second drive means take the form respectively of first (15a) and second (15b) slides, each of which is rigidly connected to the third (14a) and fourth (14b) rods, respectively comprising a housing homologous to the ninth (P) and tenth (R) articulations, and which are located on either side of the first axis (X), and into which the ninth (P) and tenth (R) articulations respectively are slidable along respective axes perpendicular to the first axis X.

13. Mechanism according to claim 11, **characterised in that** the first and second drive means respectively take the form of third (16a) and fourth (16b) arms, which are respectively rigidly connected to the first (13a) and second (13b) con-rods and are mounted rotatably respectively about the ninth (P) and tenth (R) articulations, the third (16a) and fourth (16b) arms being mounted rotatably furthermore respectively about an eleventh (U) and a twelfth (S) articulation carried by the third (14a) and fourth (14b) rods.

14. Mechanism according to claim 11, **characterised in that** the first and second drive means comprise respectively first (13a) and second (13b) pinions of equal diameter, each of which is mounted rotatably respectively about the ninth (P) and tenth (R) articulations about respective axes parallel to the second axis Y, and which are connected respectively to the third (14a) and fourth (14b) rods via an eleventh (U) and twelfth (S) articulation respectively, the said drive means further comprising a first (18a) and a second (18b) toothed wheel portion having a respective centre merging with the positions occupied by one of the fifth (I) or sixth (J) articulation and of the first articulation (Q) respectively, and having respective diameters equal to twice the diameter of the first pinion (17a), being rigidly connected respectively to one of the first (5a) or second (5b) arms and the end piece (1), and being disposed on either side of the first axis X, the toothed face of one toothed wheel being opposite to the toothed face of the other.

15. Mechanism according to one of claims 1 to 3, **characterised in that** the support means (8) comprise a pinion (37), which is mounted rotatably at its centre on the fixed piece (2) about the second articulation (A), and which is capable of communicating its rotation movement through the third angle γ to a toothed rim (38) whose centre merges with the first point O, and which carries fixing means (4a, 4b) such that the first axis X is pivotable about the second axis Y, having an amplitude of rotation substantially equivalent to the third angle γ.

16. Mechanism according to one of claims 1 to 4 and 15, **characterised in that** the first (Q) and one of the second (A), third (C), fourth (E), fifth (1), sixth (J), seventh (F) and eighth (B) articulations respectively comprise a first (33) and a second (34) angular position sensor connected to a control unit (36) capable of managing the first articulation (Q), in such a manner that the second angle α of rotation of the end piece (1) relative to the transmission means (3) is substantially equal to the third angle γ of rotation of at least part of the support means (5a, 5b) relative to the fixed piece (2) about the second articulation (A).

## Patentansprüche

1. Anordnung mit zwei unabhängigen Drehbewegungen eines Endstücks (1) bezüglich eines festen Stücks (2) mit Stützeinrichtungen (5a, 5b), die mit dem festen Stück (2) verbunden sind und Befestigungseinrichtungen (4a, 4b) tragen, in denen Übertragungseinrichtungen (3) drehbeweglich angeordnet sind, die von einer ersten Drehbewegung, mit einem ersten Winkel β und um eine erste Achse X angeregt werden, wobei die Übertragungseinrichtungen (3) ein erstes Gelenk (Q) aufweisen, damit das Endstück (1) mit einer zweiten Drehbewegung um eine zweite Achse Y, senkrecht zur ersten Achse X angeregt wird und letztere in einem ersten Punkt O schneidet, wobei die zweite Drehbewegung des Endstücks (1) bezüglich der Übertragungseinrichtung (3) mit einer Amplitude gleich einem zweiten Winkel α erfolgt,
**dadurch gekennzeichnet, daß** die Stützeinrichtungen (5a, 5b) wenigstens teilweise in der Lage sind, um einen dritten Winkel γ um ein zweites Gelenk (A) zu schwenken, das das feste Stück (2) aufweist, und um eine Kreisbewegung der Befestigungseinrichtungen (4a, 4b) um die zweite Achse X zu erzeugen, derart, daß die erste Achse X in der Lage ist, um die zweite Achse Y mit einer Drehamplitude zu schwenken, die gleich dem Winkel γ ist,
und daß die Stützeinrichtungen (5a, 5b) und die Übertragungseinrichtungen (3) in der Lage sind, gemeinsam zusammenzuwirken, um das erste Gelenk (Q) zu steuern, derart, daß eine Drehung wenigstens eines Teils der Stützeinrichtungen (5a, 5b) um das zweite Gelenk (A) eine Drehung des Endstücks (1) bezüglich der Übertragungseinrichtungen (3) um das erste Gelenk (Q) um den zweiten Winkel α induziert, der mit dem dritten Winkel y durch eine vorbestimmte Funktion verbunden ist,
was einem jeden Punkt des Endstücks (1), der auf einer Geraden angeordnet ist, die durch den ersten Punkt O und senkrecht zur ersten Achse X verläuft, ermöglicht, während der ersten und/oder zweiten Drehbewegung des Endstücks (1) bezüglich des festen Stücks (2) eine Amplitudenbahn zu beschreiben, die ungleich Null ist.

2. Anordnung nach Anspruch 1, **dadurch gekennzeichnet, daß** die Übertragungseinrichtungen (3) darüber hinaus wenigstens eine kreiszylindrische Stange (39) aufweisen, mit einer Drehachse, die mit der ersten Achse X zusammenfällt, in einer mit einem Block (4a) homologen Aufnahme, die die Befestigungseinrichtungen (4a, 4b) aufweisen.

3. Anordnung nach Anspruch 2, **dadurch gekennzeichnet, daß** Anschlageinrichtungen (11a, 11b) auf der zylindrischen Stange (39) und/oder auf dem Block (4a) angebracht sind, um eine Translationsbewegung der zylindrischen Stange (39) und der Übertragungseinrichtungen (3) bezüglich der Befestigungseinrichtungen (4a, 4b) entlang der ersten Achse X zu unterbinden.

4. Anordnung nach einem der vorhergehenden Ansprüche, **dadurch gekennzeichnet, daß** die Stützeinrichtungen (5a, 5b) wenigstens aufweisen:
- eine erste Stange (6), die drehbeweglich an dem ersten Stück (2) um das zweite Gelenk (A) angebracht ist,
- einen ersten Arm (5a) und einen zweiten Arm (5b), die drehbeweglich auf der ersten Stange (6) um ein drittes (C) bzw. ein viertes (E) Gelenk angebracht sind, und ein fünftes (I) bzw. ein sechstes (J) Gelenk tragen, um die die Befestigungseinrichtungen (4a, 4b) schwenken, und
- eine zweite Stange (7), die drehbeweglich wenigstens auf dem ersten (5a) oder dem zweiten (5b) Arm angebracht ist und auf dem festen Stück (2) und um ein siebtes (F) bzw. ein achtes (B) Gelenk,
derart, daß:
- das zweite (A), dritte (C), vierte (E), fünfte (I), sechste (J), siebte (F) und achte (B) Gelenk Drehbewegungen um entsprechend untereinander parallele Drehachsen und senkrecht zur ersten Achse X zu ermöglichen,
- das erste (Q), zweite (A), dritte (C), vierte (E), fünfte (I), sechste (J), siebte (F) und achte (B) Gelenk in dem Raum entsprechende Positionen besetzen, die im wesentlichen in der selben Ebene liegen, die die erste Achse X enthält,
- das zweite (A), dritte (C) und vierte (E) Gelenk ausgerichtet sind,
- die Positionen des zweiten (A), achten (B), siebten (F) und dritten (C) Gelenks ein Parallelogramm bilden,
- die Positionen des fünften (I), sechsten (J), vierten (E) und dritten (C) Gelenks ein Parallelogramm bilden,
- das fünfte (I) und dritte (C) Gelenk um einen Abstand voneinander beabstandet sind, der gleich einem Abstand ist, der das sechste (J) und vierte (E) Gelenk trennt, und einem Abstand beabstandet sind, der das erste (Q) und zweite (A) Gelenk trennt,
derart, daß eine Drehbewegung des dritten Winkels γ um das zweite Gelenk (A) eine Drehbewegung mit dem dritten Winkel γ der ersten Achse X um die zweite Achse Y, und ein Schwenken der Befestigungseinrichtungen (4a, 4b) bezüglich des ersten (5a) und zweiten (5b) Arms, um das fünfte (I) und sechste (J) Gelenk, mit dem dritten Winkel y erzeugt.

5. Anordnung nach Anspruch 4, **dadurch gekennzeichnet, daß** das erste Gelenk (Q) mit einem der beiden Gelenke, dem fünften (I) oder dem sechsten (J) verbunden ist durch Kopplungseinrichtungen (9a, 9b, 10a, 10b, 11), damit eine Drehung über den dritten Winkel γ der Befestigungseinrichtungen (4a, 4b) um das fünfte (I) und/oder sechste (J) Gelenk die zweite Drehbewegung um das erste Gelenk (Q) über den Winkel **α** des Endstücks (1) bezüglich der Übertragungseinrichtungen (3) induziert.

6. Anordnung nach Anspruch 5, **dadurch gekennzeichnet, daß** der zweite Winkel α im wesentlichen gleich dem dritten Winkel γ ist.

7. Anordnung nach Anspruch 6, **dadurch gekennzeichnet, daß** die Kopplungseinrichtungen (9a, 10a, 9b, 10b, 11) aufweisen:
- ein erstes (9a) und ein zweites (9b) Ritzel von identischem Durchmesser, jeweils drehbeweglich an den Befestigungseinrichtungen (4a, 4b) bzw. an den Übertragungseinrichtungen (3) angebracht sind, um eines der Gelenke, das fünfte (I) oder sechste (J) und um das erste Gelenk (Q) und entsprechend verbunden mit einem Arm, dem ersten (5a) und zweiten (5b) und dem Endstück (1), damit eine Drehbewegung über den dritten Winkel γ der ersten Achse X um die zweite Achse Y eine Drehbewegung über einen Winkel entgegengesetzt zum dritten Winkel y des ersten Ritzels (9a) bezüglich der Befestigungseinrichtungen (4a, 4b) um eines der Gelenke, dem fünften (I) oder sechsten (J) induziert, und damit eine Drehbewegung über den zweiten Winkel α des zweiten Ritzels (9b) eine zweite Drehbewegung über den zweiten Winkel α des Endstücks (1) bezüglich der Übertragungseinrichtung (3) um das erste Gelenk (Q) erzeugt, und
- Eingriffseinrichtungen (10a, 10b, 11) zwischen dem ersten (9a) und zweiten (9b) Ritzel, damit eine Drehbewegung über den dem dritten Winkel γ entgegengesetzten Winkel des ersten Ritzels (9a) eine Drehbewegung des zweiten Ritzels (9b) über den zweiten Winkel α gleich dem dritten Winkel γ induziert.

8. Anordnung nach Anspruch 7, **dadurch gekennzeichnet, daß** die Eingriffseinrichtungen (10a, 10b, 11) eine erste (10a) und eine zweite (10b) Zahnstange parallel zur ersten Achse X aufweisen und beiderseits von dieser angeordnet sind, im Eingriff mit dem ersten (9a) bzw. zweiten (9b) Ritzel und verbunden das eine mit dem anderen verbunden durch drehende Anschlageinrichtungen (11) um eine Translationsbewegung der zweiten Zahnstange (10b) bezüglich der ersten Zahnstange (10a) entlang der ersten Achse X zu verhindern, unter Ermöglichen einer Drehbewegung über den ersten Winkel β des zweiten Ritzels (9b) und der zweiten Zahnstange (10b) um die erste Achse X,
derart, daß eine Drehbewegung über den dem dritten Winkel γ entgegengesetzten Winkel des ersten Ritzels (9a) identische Translationsbewegungen der ersten (10a) und zweiten (10b) Zahnstange entlang der ersten Achse X induziert, was eine Drehbewegung des zweiten Ritzels (9b) über den zweiten Winkel α gleich dem dritten Winkel γ ermöglicht, angetrieben durch die Translationsbewegung der zweiten Zahnstange (10b).

9. Anordnung nach Anspruch 8, **dadurch gekennzeichnet, daß** das erste (9a) und zweite (9b) Ritzel in Eingriff stehen mit der ersten (10a) und zweiten (10b) Zahnstange über ein drittes (12a) bzw. viertes (12b) Ritzel von entsprechend identischem Durchmesser und angeordnet beiderseits der ersten Achse X.

10. Anordnung nach Anspruch 7, **dadurch gekennzeichnet, daß** die Eingriffseinrichtungen (11, 12a, 12b) aufweisen:
- dritte (12a) und vierte (12b) Ritzel von jeweils identischem Durchmesser, die beiderseits der ersten Achse X angeordnet sind und in entsprechendem Eingriff stehen mit dem ersten (9a) und zweiten (9b) Ritzel, und
- eine kreiszylindrische Zahnstange (11) mit einer Hauptachse, die mit der ersten Achse X zusammenfällt, in Eingriff mit dem dritten (12a) und vierten (12b) Ritzel, das in der Lage ist, sich entlang einer Translationsbewegung entlang der ersten Achse X zu bewegen, und um eine Drehbewegung mit über den ersten Winkel β um die erste Achse X zu schwenken.

11. Anordnung nach Anspruch 6, **dadurch gekennzeichnet, daß** die Kopplungseinrichtungen (13a, 14a, 15a, 13b, 14b, 15b, 11) aufweisen:
- ein erstes (13a) und ein zweites (13b) Zwischenglied, die ein neuntes (P) bzw. ein zehntes (R) Gelenk aufweisen, und drehbeweglich an den Befestigungseinrichtungen (4a, 4b) bzw. an deren Übertragungseinrichtungen (3) angebracht sind, um eines der Gelenke, dem fünften (I) oder sechsten (J) und dem ersten Gelenk (Q), derart, daß das fünfte (I) oder sechste (J) Gelenk und das neunte Gelenk (P) um einen Abstand beabstandet sind, der im wesentlichen gleich einem Abstand ist, der das erste (Q) und das zweite (R) Gelenk trennt, wobei das erste (13a) und zweite (13b) Zwischenglied entsprechend mit dem ersten (5a) bzw. zweiten (5b) Arm und dem Endstück (1) entsprechend verbunden sind, damit eine Drehbewegung über den dritten Winkel γ der ersten Achse X um die zweite Achse Y eine Drehbewegung über den zum dritten Winkel y entgegengesetzten Winkel des ersten Zwischenglieds (13a) bezüglich der Befestigungseinrichtungen (4a, 4b,) um das fünfte (I) bzw. sechste (J) Gelenk induziert, und damit eine Drehbewegung über den zweiten Winkel α des zweiten Zwischenglieds (13b) die zweite Drehbewegung über den zweiten Winkel α des ersten Endstücks (1) bezüglich der Übertragungseinrichtungen (3) um das erste Gelenk (Q) erzeugt,
- dritte (14a) und vierte (14b) Stangen, die in der Lage sind, mit einer Längsbewegung entlang der ersten Achse X zu gleiten, die miteinander durch drehende Anschlageinrichtungen (L) verbunden sind, um eine Translationsbewegung der vierten Stange (14b) bezüglich der dritten Stange (14a) entlang der ersten Stange X zu verhindern, unter Ermöglichen einer Drehbewegung über den ersten Winkel β des zweiten Zwischenstücks (13b) und der vierten Stange (14b) um die erste Achse X,
- erste Antriebseinrichtungen zwischen dem ersten Zwischenstück (13a) und der dritten Stange (14a), damit eine Drehbewegung über den Winkel entgegen dem dritten Winkel γ des ersten Zwischenstücks (13a) eine Translationsbewegung entlang der ersten Achse X der dritten (14a) und vierten (14b) Stange induziert, und
- zweite Antriebseinrichtungen zwischen der vierten Stange (14b) und dem zweiten Zwischenstück (13b), damit eine Translationsbewegung entlang der ersten Achse X der vierten Stange (14b) eine Drehbewegung über einen Winkel gleich dem dritten Winkel y des zweiten Zwischenstücks (13b) induziert.

12. Anordnung nach Anspruch 11, **dadurch gekennzeichnet, daß** die erste und zweite Antriebseinrichtung in Form einer ersten (15a) bzw. einer zweiten (15b) Kulisse ausgebildet ist, die mit der dritten (14a) bzw. vierten Stange (14b) verbunden sind, mit einer mit den neunten (P) und zehnten (R) Gelenken homologen Aufnahme, die beiderseits der ersten Achse X angeordnet sind, und in denen das neunte (P) bzw. zehnte (R) Gelenk in der Lage sind entlang von entsprechenden Achsen, senkrecht zur ersten Achse X zu gleiten.

13. Anordnung nach Anspruch 11, **dadurch gekennzeichnet, daß** die ersten und zweiten Antriebseinrichtungen in Form eines dritten (16a) bzw. vierten (16b) Arms ausgebildet sind, die mit dem ersten (13a) bzw. zweiten (13b) Zwischenstück verbunden sind und drehbeweglich um das neunte (P) bzw. zehnte (R) Gelenk angebracht sind, wobei der dritte (16a) und vierte (16b) Arm darüber hinaus drehbeweglich um ein elftes (U) bzw. ein zwölftes (S) Gelenk angebracht ist, das die dritte (14a) bzw. vierte (14b) Stange tragen.

14. Anordnung nach Anspruch 11, **dadurch gekennzeichnet, daß** die ersten und die zweiten Antriebseinrichtungen die ersten (13a) bzw. zweiten (13b) Ritzel von entsprechend gleichen Durchmessern aufweisen, die drehbeweglich an den neunten (P) bzw. zehnten (R) Gelenkachsen angebracht sind, die entsprechend parallel zur zweiten Achse Y sind, verbunden mit dritten (14a) bzw. vierten (14b) Stangen mittels eines elften (U) bzw. eines zwölften (S) Gelenks, und einem ersten (18a) und einem zweiten (18b) Zahnradabschnitt dessen Zentrum mit den Positionen zusammenfällt, die von dem fünften (I) oder dem sechsten (J) Gelenk bzw. dem ersten Gelenk (Q) zusammenfällt, und mit Durchmessern die entsprechend gleich dem doppelten des Durchmessers des ersten Ritzels (17a) sind, verbunden mit dem ersten (5a) oder zweiten (5b) Arm bzw. dem Endstück (1) und beiderseits angeordnet von der ersten Achse X, wobei die Zahnseite von einem gegenüber der Zahnseite des anderen liegt.

15. Anordnung nach einem der Ansprüche 1 bis 3, **dadurch gekennzeichnet, daß** die Stützeinrichtungen (8) ein Ritzel (37) aufweisen, das in seinem Zentrum drehbeweglich an dem festen Stück (2) um das zweite Gelenk (A) angebracht ist, und in der Lage ist, seine Drehbewegung über den dritten Winkel γ auf eine Zahnkrone (38) zu übertragen, deren Zentrum mit dem ersten Punkt O zusammenfällt und das Befestigungseinrichtungen (4a, 4b) trägt, derart, daß die erste Achse X in der Lage ist, um die zweite Achse Y zu schwenken, mit einer Drehamplitude, die im wesentlichen gleich dem dritten Winkel γ ist.

16. Anordnung nach einem der Ansprüche 1 bis 4 und 15, **dadurch gekennzeichnet, daß** das erste (Q) Gelenk und eines von dem zweiten (A), dritten (C), vierten (E), fünften (I), sechsten (J), siebten (F) und achten (B) Gelenken einen ersten (33) bzw. einen zweiten (34) Wegepositionsaufnehmer aufweisen, die mit einem Steuermodul (36) verbunden sind, das in der Lage ist, das erste Gelenk (Q) zu beherrschen, derart, daß der zweite Drehwinkel α des Endstücks (1) bezüglich der Übertragungseinrichtung (3) im wesentlichen gleich dem dritten Drehwinkel γ wenigstens eines Abschnitts der Stützeinrichtungen (5a, 5b) bezüglich des festen Stücks (2) um das zweite Gelenk (A) ist.
